Europäisches Patentamt

European Patent Office

Office européen des brevets

(19)

(11) Publication number: **0 057 541**
**A1**

# EUROPEAN PATENT APPLICATION

(12)

(21) Application number: **82300338.9**

(22) Date of filing: **22.01.82**

(51) Int. Cl.³: **G 06 F 15/46**

(30) Priority: **23.01.81 US 227969**
**23.01.81 US 227970**

(43) Date of publication of application: **11.08.82**
**Bulletin 82/32**

(84) Designated Contracting States: **AT BE CH DE FR GB IT**
**LI LU NL SE**

(71) Applicant: **Babcock-Bristol Ltd., 218, Purley Way,**
**Croydon CR9 4HE (GB)**

(72) Inventor: **Molusis, Anthony J., 61, Tanglewood Drive,**
**Southington Connecticut 06489 (US)**
Inventor: **O'Loughlin, Thomas M., 93 Mark Street, Milford**
**Connecticut 06460 (US)**

(74) Representative: **Sinnett, Richard Albert Edward,**
**Babcock International Limited Cleveland House 19 St.**
**James's Square, London SW1Y 4LN (GB)**

(54) **Improvements in or relating to single loop control system.**

(57) This invention provides a microprocessor based control instrument which can operate as any one of several types of controllers, each providing two or more modes of operation. The instrument incorporates a read only memory and means for causing the control instrument to operate as one of the types of controllers provided for by the program, and switch means for selecting the mode of operation. The instrument may have a control panel controlled by a second microprocessor and may incorporate a bar graph display and means for selecting the signal displayed.

To facilitate the re-configuring of such instruments, a microprocessor based keyboard/display may be provided in which the function of the keys is varied automatically depending on the instrument to which the keyboard/display is connected. The keyboard/display may comprise a random access memory in which may be stored data received from one instrument, and from which may be read data from said keyboard/display. The keyboard/display can be used with a recorder to provide for print-out of the data stored in the random access memory.

- 1 -

"Improvements in or relating to Single Loop Control Systems"

DESCRIPTION

This invention is concerned to provide a single loop control (SLC) system that may be used for process control.

Process control systems are used in numerous applications to regulate one or more parameters of a process. Most control systems are closed-loop control systems in which information about a controlled variable is fed back to a controller to serve as the basis for control of one or more process variables. A signal representative of the controlled variable is compared by the controller with a preset desired value, or set point, of the controlled variable. If there is a difference, the controller produces an output such as to reduce the difference by manipulating one or more of the process variables. For example, the controlled variable might be the temperature of an effluent stream from a mixing tank, and the process variables might be the temperature and flow rate of the stream emptying into the tank as well as the speed of a mixer in the tank. If the temperature of the effluent is too low, the controller might open a little more a valve regulating the flow of one of the streams emptying into the tank or adjust the speed of the mixer.

- 2-

Many linear-feedback control systems can be represented by the input-output relationship:

$$\frac{C}{R} = \frac{KG}{1 + KGH}$$

where C is the output, R is the set point, KG is the forward-loop transfer function, H is the feedback loop transfer function, and KGH is the open-loop transfer function.

For many processes it can be shown that the best controller is one which provides proportional, integral and derivative (PID) control. Proportional control of a first order process reduces the time constant of the system and the apparent gain of the process. However, it also introduces a deviation, or offset, between the time average of the controlled variable and the set point. This offset can be compensated for by providing for integral, or reset, control in addition to proportional control. Although the use of integral control tends to slow the response of the system, deri; vative control counters this by tending to anticipate where a process is going so that it can correct for the change in error. Ideally, the PID transfer function is given by the following equation:

$$\frac{M(s)}{E(s)} = K_c \left(1 + \frac{1}{T_i s} + T_d s\right)$$

- 3 -

where M is the manipulated variable, E is the error, $K_c$ is the controller gain, $T_i$ is the reset time and $T_d$ is the rate or derivative time. Each manufacturer of PID controllers typically uses a somewhat different transfer function. Numerous techniques are available to design or tune PID controllers to practical application. Details concerning many of these techniques are set forth in Section 22 of Perry & Chilton, Chemical Engineer's Handbook (McGraw Hill, 5th Ed.1973).

Until quite recently most process controllers were analog devices because analog circuitry was the only cost effective way to build a single-loop controller. Such devices, however, could not easily be modified and could not execute complex control algorithms. As a result, they tended to be expensive and/or had limited capability.

According to the present invention, there is provided a microprocessor based single loop control instrument comprising a first microprocessor, a read only memory in which is stored an operating program for said first microprocessor, said program containing machine instructions sufficient to perform a single loop control algorithm which produces an output signal in response to at least a process variable and a setpoint and sufficient to operate said control instrument as one of at least two different types of controllers each having at leasst two operating modes, means for causing said control instrument to operate as one of the controller types provided for by the program stored in said read only memory, and means for selecting the mode of operation of the controller selected by said causing means.

According to the present invention there is also provided a microprocessor based single loop control instrument comprising a first microprocessor, a read only memory in which is stored an operating program for said first microprocessor, said program containing machine instruction sufficient to perform a single loop control PID algorithm which produces an output signal in response to at least a process variable and a setpoint and sufficient to operate said control instrument as one of at least two different types of controllers each having at least two operating modes, means for causing said control instrument to operate as one of the controller types provided for by the program stored in said read only memory, a communication bus connected to said first microprocessor, and a control panel that comprises a second microprocessor connected to said communication bus, a bar graph display controlled by said second microprocessor for displaying at least one signal related to the operation of said control instrument, means for selecting the mode of operation of the controller selected by said means, and means for selecting at least one of the signals displayed by said bar graph display.

- 5 -

Apparatus embodying the invention will now be described, by way of example with reference to the accompanying drawings in which:

Figure 1 is a schematic diagram of a single loop control system based on a microprocessor and intended for use in process control.

Figure 2 is a schematic diagram of a controller which is an element of the system of Figure 1;

Figure 3 is a schematic diagram of a front panel which is an element of the system of Figure 1,

Figures 4A and 4B illustrate overlays which may be used in conjunction with the front panel of Figure 3;

Figure 5 is a schematic diagram of an auxiliary unit which is an element of the system of Figure 1;

Figure 6 is a schematic diagram of a serial communication module which is an element of the system of Figure 1;

Figure 7 is a schematic diagram illustrating certain functions of an intelligent keyboard/display which is an element of the system of Figure 1;

Figures 8 to 17 are block diagrams depicting software used in the system of Figure 1;

Figure 18 is a schematic diagram showing the intelligent keyboard/display in more detail;

Figure 19 is a schematic diagram of a recorder adapted to print alphanumeric or graphic displays from the intelligent keyboard/display; and

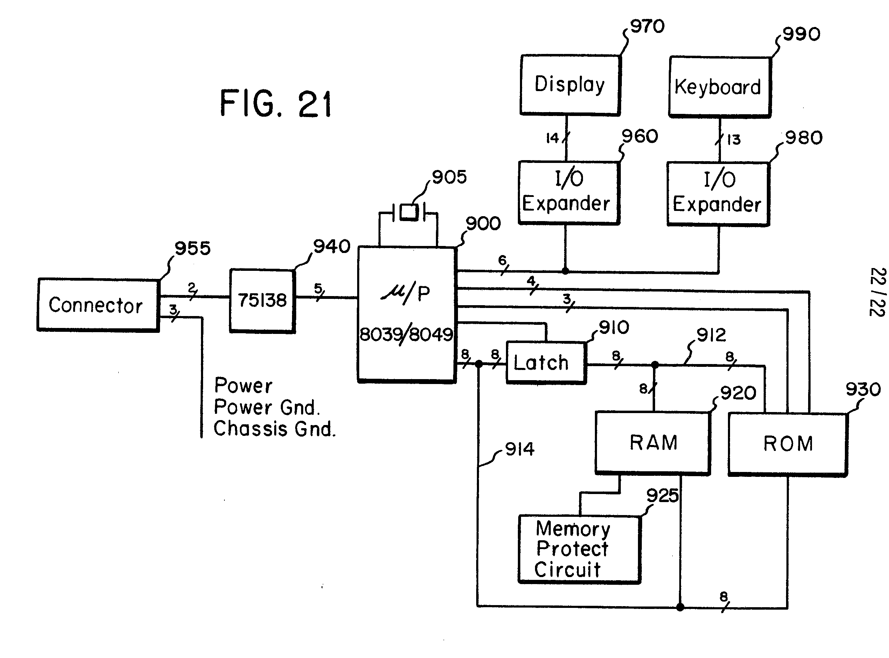

Figures 20 and 21 are schematic diagrams illustrating details of the records resulting from the use of the apparatus illustrated in Figure 19.

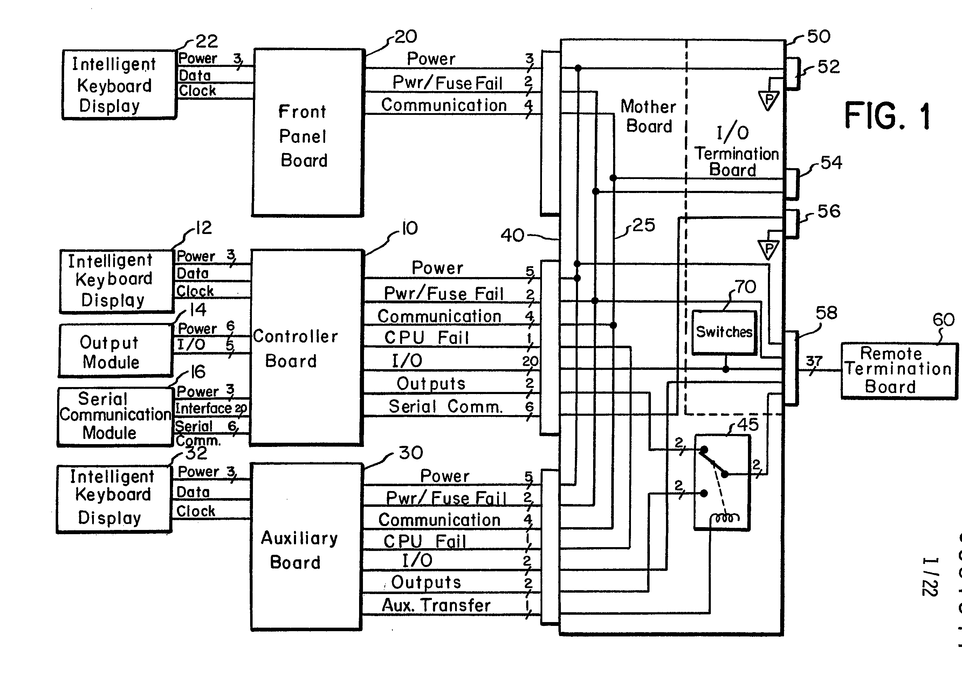

Figure 1 is a schematic diagram of a SLC system of the present invention comprising controller circuit board 10, a front panel board 20, an auxiliary board 30, a mother board 40 and an I/O termination board 50. Connected to each of controller board 10, front panel board 20, and auxilary board 30 are intelligent keyboard/displays 12, 22, 32, respectively. Also connected to controller board 10 are an output module 14 and a serial communication module 16. I/O termination board 50 provides a power connector 52, a remote front panel connector 54, a communication connector 56 and a termination connector 58. A remote termination board 60 is connected to the I/O termination connector 58. Up to eight DIP switches 70 provide voltage or current selection for the analog inputs to the SLC system. For convenience, the function of various leads between the individual boards has been indicated; and where a single drawing line is used to represent more than one lead, the number of leads so represented is indicated by a numberal accompanying a slash mark through the drawing line.

As the name suggests, controller board 10 provides the main control for the system. However, each of controller board 10, front panel board 20, auxiliary board 30, the intelligent keyboard/displays 12,22 and 32, and the serial communication module 16 contains its own microcomputer in the form of a microprocessor and read only memory. Front panel board 20 provides a series of control switches and displays which may be located a considerable distance from the controller and other elements of the system. Auxiliary board 30 functions as a backup for controller board 10 and is switched into operation by relay 45 on mother board 40 if the processor of controller board 10 should fail. The intelligent keyboard/displays 12,22 and 32 are identical and provide a means for reading data from and writing data into a random access memory on controller board 10. The serial communication module 16 provides a means for converting parallel dats from the controller board 10 to serial data that is compatable with standard interfaces such as the RS232 and RS423 interfaces.

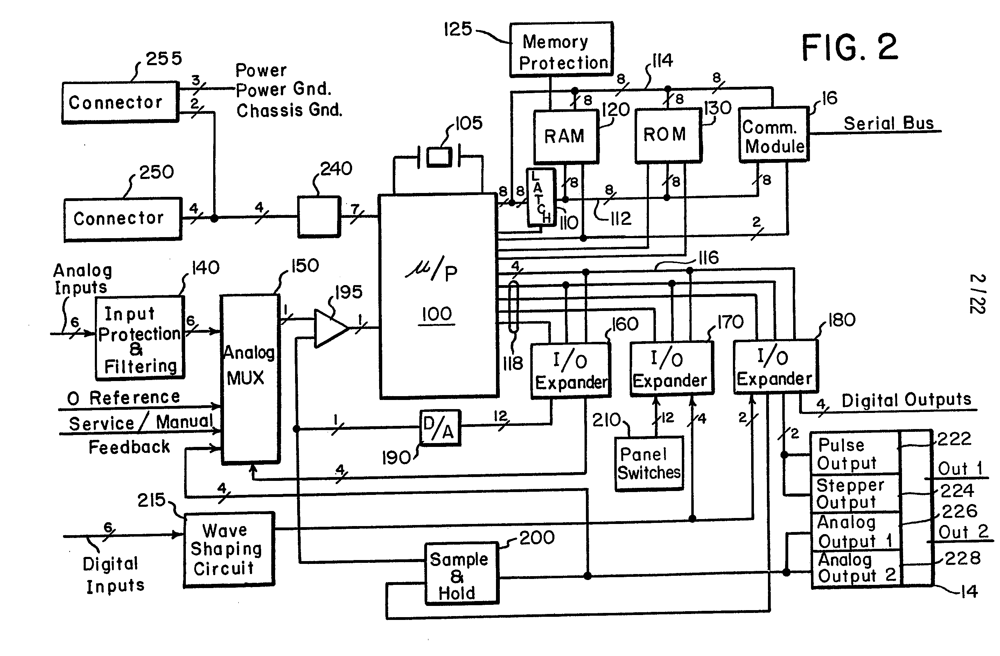

The microcomputer that is resident on controller board 10 is shown in greater detail in Figure 2. As shown therein the computer comprises a microprocessor 100, an .8 MHz crystal oscillator 105, a latch 110, a random access memory (RAM) 120, a memory protection circuit 125, a read only memory (ROM) . 130, serial communication module 16, an input protection and filtering circuit 140, an analog multiplexer 150, I/O expanders 160, 170, 180, a digital to analog circuit 190, a comparator 195, a sample and hold circuit 200, a set of switches 210, a wave-shaping circuit 215, output module 14, a communications multiplexer 240 and connectors 250 and 255.

0057541

- 8 -

Microprocessor 100 may, for example, be an intel 8039/8049 microprocessor. Latch 110 is a 373-type octal D-type flip-flop which controls an address bus 112 in response to a signal from microprocessor 100. Address bus 112 provides eight bits of address to each of RAM 120, ROM 130 and the communication module 16. Data from these units is returned to microprocessor 100 on an eight bit parallel data bus 114. RAM 120 is a pair of 5101-type 256 x 4 bit CMOS memory chips connected together to provide 256 bytes of random access storage. Two control lines from microprocessor 100 control the operation of writing into and reading from these chips. The data stored in RAM 120 includes all programming options and tuning parameters. The stored data is protected against power failure by a long-life battery in memory protection circuit 125. ROM 130 is three units of 2K X 8 bit memory such as a 2716-type read only memory. Each of these units is addressed by the eight address lines of bus 112 and three additional address lines. Two additional lines plus control logic (not shown) select the individual ROM chip. The operating program for the controller is stored in ROM 130. This program enables the controller to function as any one of the following seven types (or models) of controllers; a local/manual controller; a local/manual/remote controller; a local/manual/computer controller; an automatic/manual/direct digital control (ddc) controller; a local/manual/ratio controller; a cascade controller; an auto select controller. Extensive details concerning these controllers are set forth below. The particular types of controller is determined by the positions of three of swiches 210 which are read by microprocessor 100.

There are up to six analog inputs to the controller. Protection against voltage excursions and high-frequency transients is provided by input protection and filtering circuit 140. The filtered analog signals, as well as a zero reference signal, a feedback signal from auxiliary board 30 and, optionally, output signals from sample and hold circuit 200 are applied to analog multiplexer 150. Multiplexer 150 illustratively is a 4051-type one-out-of-eight multiplexer whose output is selected by three of the lines from I/O expander 160 and whose operation is controlled by a fourth such line. The analog output of multiplexer 150 is converted to a digital signal by means of twelve bit digital-to-analog converter 190, comparator 195 and a standard analog-to-digital programming routine which is executed by microprocessor 100.

I/O expanders 160, 170, 180 are connected to microprocessor 100 via data bus 116 and select lines 118. I/O expander 170 provides for signal inputs from four digital inputs and twelve switches 210. The digital inputs are applied to I/O expander 170 from wave-shaping circuits 215 which comprises conventional level shifters and Schmitt triggers. The twelve switches are used to configure the software for various options. As noted above, three of the switches determine which of the seven types of controllers is operative on the controller board and front panel board. Additional switches permit the selection of one of four possible outputs from output module 14, the units (minutes or seconds, inverse or not) in which the PID constants are expressed, analog output range (1-5 volts or 0-5 volts), and features such as advanced tuning, computer signal type for the local/manual/computer and local/manual/ddc controllers and start-up mode.

I/O expander 180 provides for two digital inputs, four digital outputs as well as analog output through sample and hold circuit 200 and/or output module 14. In accordance with the position of two of switches 210, module 14 provides for the connection of one of four output modules to output lines OUT 1 and OUT 2: a pulse output module 222, stopper output module 224, and two analog output modules, the first being a floating current output module 226 and the second a common ground output module 228. The stopper output module 224 provides a two phase output of +24 volt signals to drive a stepper motor. Software routines generate the phase shift for the desired direction as well as control the stepping frequency. The pulse output module 222 prevides raise and lower signals which can be used with solid state relays (not shown) to drive AC motors which open and close a valve, or with conventional electromechanical relays. The floating current output module 226 provides an analog output voltage on output line OUT 1 and a floating current output of 4 to 20 milliAmps on output line OUT 2. The common ground output module 228 provides an analog output voltage an output line OUT 1 and a common ground current output of 0 to 20 mA on output line OUT 2. In the absence of any output module, an analog voltage signal is present on output line OUT 1, The analog voltage signal from sample and hold circuit 200 may be fed back to microprocessor 100 through analog multiplexer 150 to compensate for drift and offset.

Communication multiplexer 240 is a 75138-type multiplexer which is used to multiplex incoming and outgoing clock and data signals. Connector 250 provides for the transmission of clock, data, raise and lower signals between the microprocessors of controller board 10, front panel board 20 and auxiliary board 30. The four bit bus to connector 250 of Figure 2 is the same as the four bit communication bus 25 of Figure 1 This bus permits the controller board 10, front panel board 20 and auxiliary board 30 to be mounted either as an integral unit or for the front panel board to be remote by up to several hundred feet with no difference in the boards or their functions. Connector 255 provides for the transmission of clock and data signals to and from the intelligent keunoard/display 12. The signals from keuboard/display 12 are therefore present on the communication bus and are processed by the microprocessors of the boards to which the bus is connected.

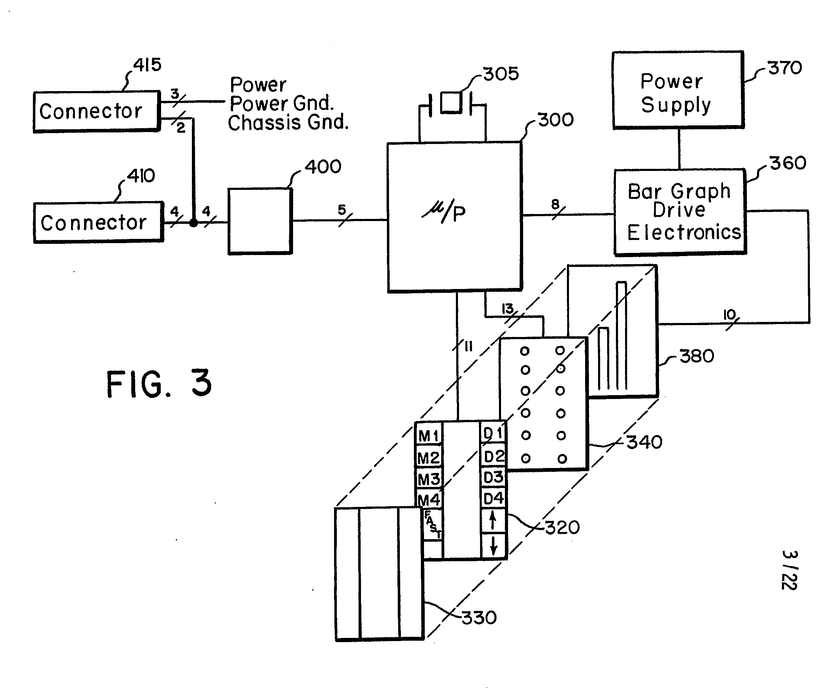

The microcomputer that is resident on front panel board 20 is shown in greater detail in Figure 3. This microcomputer comprises a microprocessor 300, a 6 MHz crystal oscillator 305, a switch panel 320, an overlay 330, an array of light emitting diodes (LEDs) 340, bar graph drive electronics 360, a bar graph power supply 370, a bar graph display 380, a communications multiplexer 400 and connectors 410, 415. Microprocessor 300 may, for example, be an Intel 8748/8048 microprocessor. The microprocessor 300 controls the reading of the switches of panel 320, their debouncing and the lighting of the LEDs. It also generates the timing signals for the bar graph display so that two variables can be shown. Likewise, it can receive data from and send data to controller board 10 and auxiliary board 30.

Front panel board 20 serves as the operator interface to such of the several different types or models of controllers listed earlier which in the present proposal share the same hardware and software. Switch panel 320 contains eleven switches. Depending on the particular type or model of controller, up to four of these switches (M1-M4) are available for selecting the operating mode of the controller such as LOCAL or MANUAL. Again depending on the type or model, up to four switches (D1-D4) are available to select for diplay on the bar graph such parameters as process variable (PV), setpoint (SP), and output. Three switches are available for changing displayed variables provided the displayed variable is changeable and the front panel is in the correct mode. The RAISE switch (↑) will increase the variable at a rate of 1% per second; and the LOWER switch (↓) will decrease the variable at the same rate. The FAST switch will increase the slew speed to 15% per second. An array of light-emitting diodes indicates the status of the switches of the switch panel as well as the availability of power (PWR) and the operating status of auxiliary board 30 (S/M). The diodes may be lighted directly by action of the switches or, as shown in Figure 3, under control of the microprocessor 300. ⌐

A suitable form for the bar graph 380 is a commercially available dual 201 segment bar graph display such as the 12205 display available from Burroughs. Two variables are displayed simultaneously, the particular variables being selected by switches D1-D4. Drive electronics 360 and power supply 370 convert the low voltage level signal produced by microprocessor 300 to the high voltage level signals used by the bar graph display 380. A suitable form for the power supply 370 is a 24 volt to 250 volt DC to DC converter. Multiplexer 400 and connectors 410, 415 are similar to the multiplexer 240 and connectors 250, 255, of Figure 2; and the four bit bus to connector 410 is the same as the four bit communication bus 25 of Figure 1. If desired, multiple front panels can be connected to controller board 10 via this communication bus.

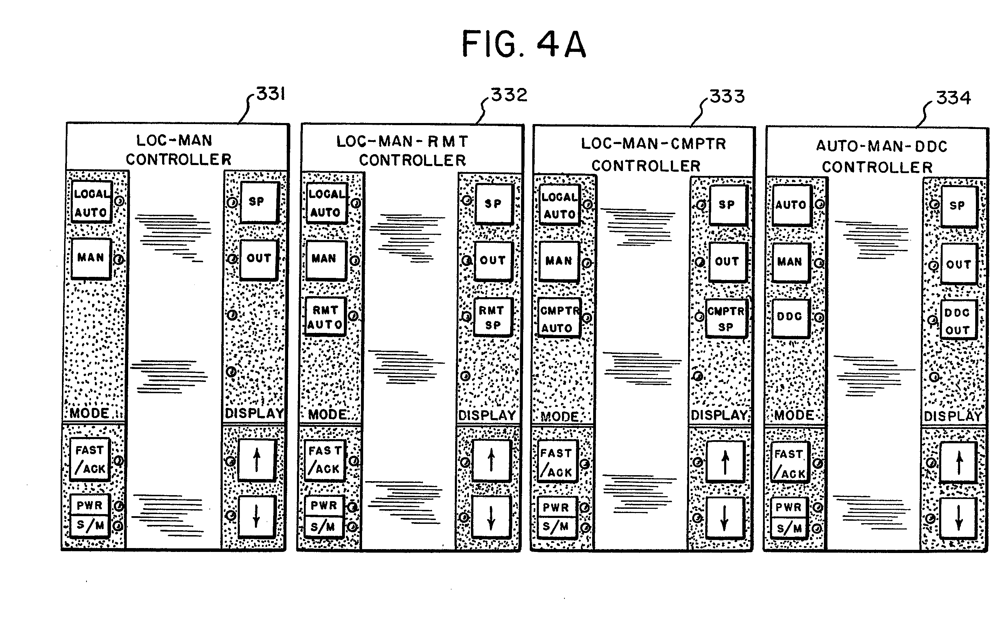

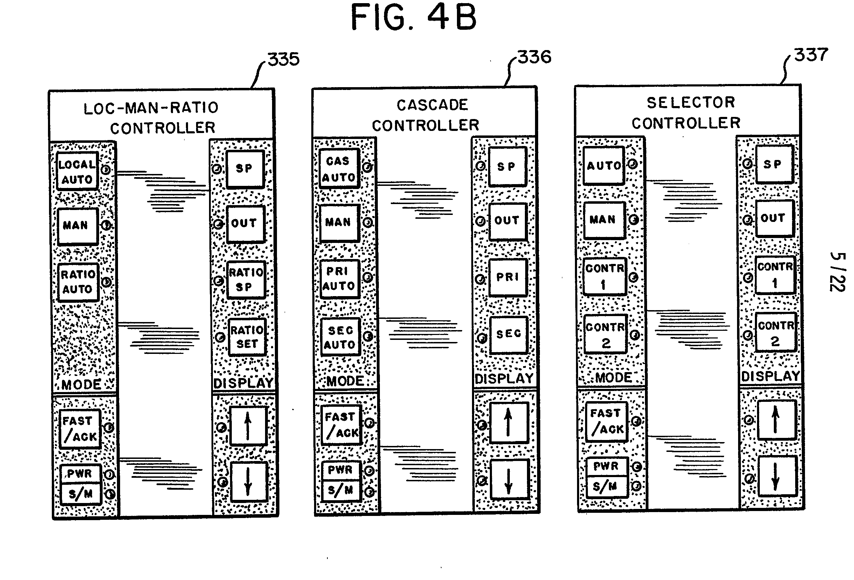

To identify the particular function of the switch and the type of controller, an overlay 330 is inserted on top of switch panel 320. Figures 4A and 4B depit the seven overlays 331-337 used for the seven types of controllers that controller board 10 and front panel 20 provide. Each indicates the RAISE ($\uparrow$) and LOWER ($\downarrow$) switch as well as the FAST switch and switch to indicate status. The functions of the other switches shown in Figures 4A and 4B and their effect on the bar graph display are indicated in Table 1 which lists the various modes in which each of the seven types of controllers is able to operate.

In the SERVICE MANUAL mode, which features in T Table 1, the controller is not controlling the process. Its output, however, tracks the output of auxiliary board 30 which is providing manual outputs to the process. In the MANUAL mode, the output of the controller is held at a constant value unless change is specified by a manual entry. The output value may be changed by the RAISE and LOWER switches of front panel board 20, by intelligent keyboard/display 22, or by signals received by the serial communications module 16. In the LOCAL AUTO mode, the proportional-integral-derivation (PID) algorithm is used to calculate the output value based on inputs representing the process variable (PV), the set point (SP), the valve position feed back (VPFB) and the PID constants. The REMOTE AUTO and RATIO AUTO modes are the same as the LOCAL AUTO mode except that the set point is externally generated. The COMPUTER AUTO Mode is the same as the AUTO mode except that the set point is supplied by a computer. The DDC mode is the equivalent of the MANUAL mode in which an external computer is directly controlling a process through the output of a controller.

The cascade controller provides for automatic control of a process by the use of two controllers. The output of a primary controller is a set point to a secondary controller and the output of the secondary controller is the output of the controller board to the process. The cascade auto (CAS AUTO) switch causes the cascade controller to operate in the CASCADE mode. When the primary auto (PRI AUTO) switch is activated to put the controller in the PRIMARY AUTO mode, just the primary controller is in operation and its output controls the process. This mode is used for tuning the primary controller. When the secondary auto (SEC AUTO) switch is activated to put the controller in the SECONDARY AUTO mode, just the secondary controller is in operation. This mode is used to tune the secondary controller and/or to provide a manual set point of the secondary controller thereby disabling cascade control.

In the auto selector controller, two controllers are used to perform PID control. Each controller has a process cariable input, a local or remote set point and an output. In the AUTO mode, both controllers calculate outputs using the PID algorithm. Either the higher or the lower of the two outputs is connected to the outside world through output line OUT 1. In the MANUAL mode, output line OUT 1 is controlled by the raise and lower switches on the front panel. In controller 1 (CONTR 1) mode, controller 1 is connected to output line OUT 1 and provides automatic control. In the controller 2 (CONTR2) mode, controller 2 is connected to output line OUT 1. When the controller is in the AUTO mode, the AUTO mode LED is lighted along with the LED associated with either the CONTROLLER 1 mode or the CONTROLLER 2 mode switch to indicate which controller's output is currently being provided to output line OUT 1.

For each of these controllers the operating mode is selected by one of the mode switches M1-M4 on switch panel 320. The LEDs associated with these switches indicate the mode selected. The display switches D1-D4 control the variable displayed on the right bar of the bar graph display. The LEDs associated with these switches indicate which variable is displayed by the right bar of bar graph display 380. The slewing switches can, in certain instances, be used to vary the variable that is displayed on the right bar of the display. For each of the seven controllers, Table 2 indicates the switch settings which determine the operating mode, the display and the variable which can be slewed.

The controller 1 (CONTR 1) and the controller 2 (CONTR 2) display LEDs are used to indicate the controller of which the process variable, setpoint and/or output are being displayed.

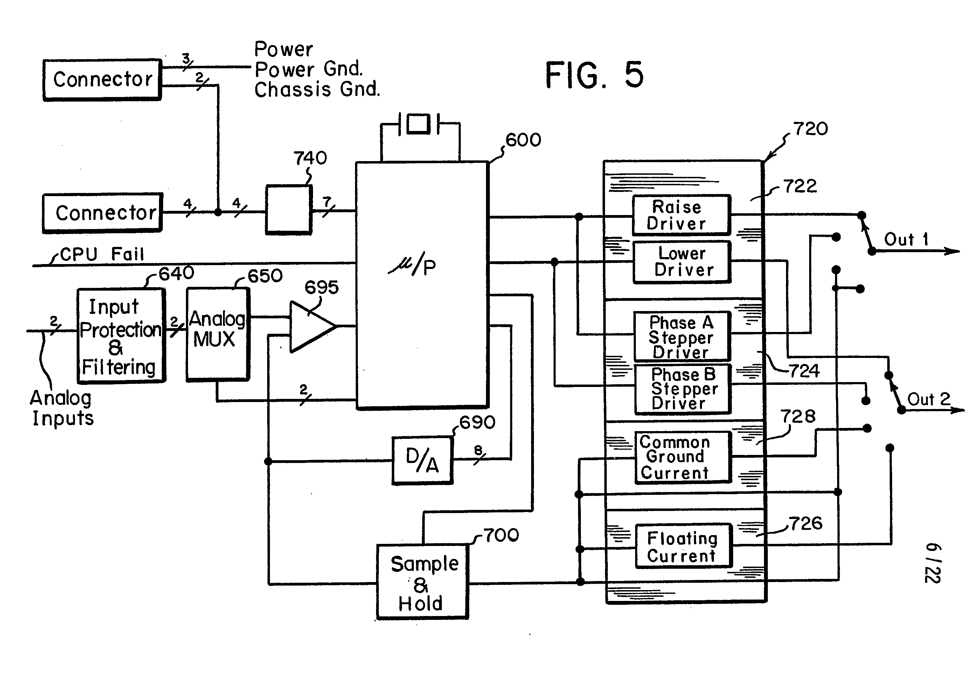

The microcomputer that is resident on auxiliary board 30 is depicted in greater detail in Figure 5. The microcomputer comprises a microprocessor 600, an input protection and filtering circuit 640, an analog multiplexer 650, a digital-to-analog converter 690, a comparator 695, a sample and hold circuit 700, an output circuit 720, a communications multiplexer 740 and connectors 750, 755. As in the case of output module 14 on controller board 10, output circuit 720 can comprise a pulse output circuit module 722, a stopper output circuit module 724, a floating current output circuit module 726 and a common ground current output circuit module 728, each of which produces output signals on output lines OUT 1 and OUT 2. The above-mentioned elements of Figure 5 are all substantially the same as the corresponding elements of the controller of Figure 2 and bear the same number incremented by 500. In contrast to the controller of Figure 2, the auxiliary unit of Figure 5 has only two analog inputs which preferably are a process variable and valve position feed back.

Auxiliary (or service/manual) board 30 provides a redundant manual output in the case of controller board failure or removal. Auxiliary board 30 has two modes of operation. Normally controller board 10 is in control of the process and the auxiliary board merely tracks the controller board's outputs and adjusts the analog outputs of the auxiliary board to the same value. Upon failure or removal of the controller board, the signal CPU fail is detected by microprocessor 600 which energizes relay 45 on mother board 40 to switch the output connection so that the signals on output lines OUT 1 and OUT 2 from the auxiliary board replace the signals on output lines OUT 1 and OUT 2 from the controller board. Since the auxiliary board was previously tracking the outputs of the controller board, this transfer is bumpless. If the controller board is operative while the auxiliary board is in control of the process, the controller board tracks the signals on output lines OUT 1 and OUT 2 from the auxiliary board so that bumpless transfer from the auxiliary board to the controller board can also be achieved.

While the auxiliary board is in control of the process, microprocessor 600 performs the following functions. A message is sent to the microprocessor 300 on front panel board 20 so as to turn on the light emitting diode (S/M) which indicates that the auxiliary board is in operation. The value of the process variable and the value of either the analog output from the auxiliary board or the valve position feedback are also digitized and sent to front panel board 20 for display on bar graph 380. In addition, the outputs from auxiliary board 30 are held at their value at the time of transfer of control from the controller board to the auxiliary board unless these values are changed by slewing commands entered via intelligent keyboard/display 32 or front panel board 20.

0057541

- 19 -

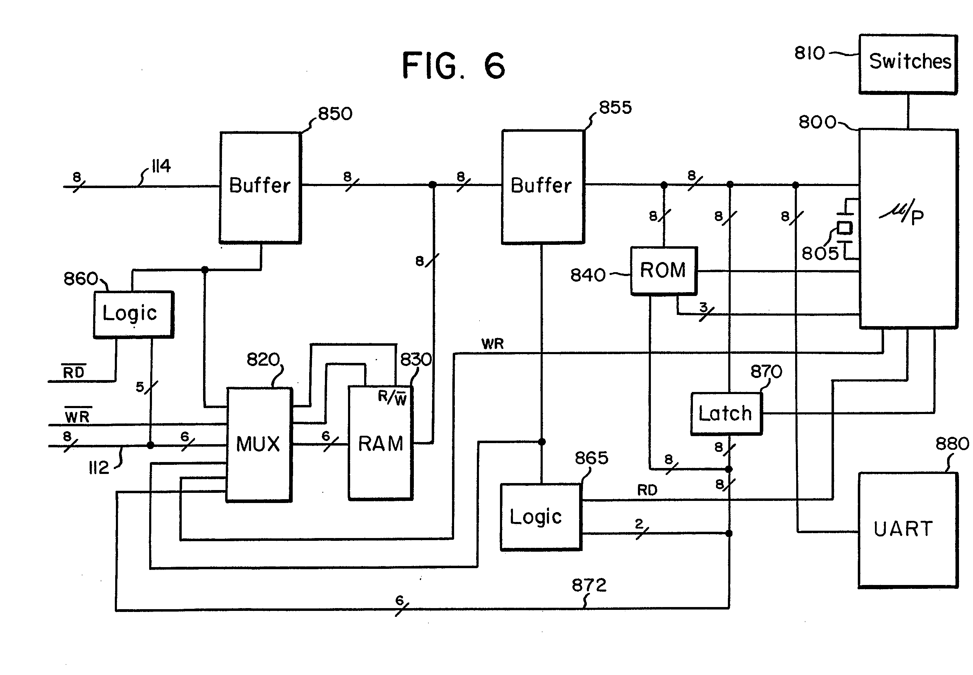

A schematic diagram of communication module 16 is set forth in Figure 6. As shown therein, the apparatus comprises a microprocessor 800, an array of switches 810, a multiplexer 820, a random access memory (RAM) 830, a read only memory (ROM) 840, bi-directional buffers 850, 855, control logic 860, 865, a latch 870 and a universal asynchronous receiver transmitter (UART) 880. The communication module is connected to controller board 10 via address bus 112, data bus 114 and the WR and RD control lines shown on the left hand side of Figure 6. Two additional control lines (not shown) are used for handshaking between the controller board and the communication module.

Microprocessor 800 may, for exampoe, be an 8039/ 8049 Intel microprocessor with a six Mhz clock crystal 805. Various control options can be set for the microprocessor by means of eight DIP switches 810. Multiplexer 820 may, for example, be a pair of 157-type quad two-input multiplexers which provide to RAM 830 either a six bit address supplied by the communication module. RAM 830 may, for example, be a 6810 memory chip which provides up to 128 bytes of random access storage which are used to exchange data between the controller board and the communication module. The read/write operation for RAM 830 may be controlled either from the controller board via the WR line and control logic 860 or from microprocessor 800 via the WR line and control logic 865.

Logics 860,865 also control the operation and the direction of signal flow through bi-directional buffers 850, 855 which may be 245-type buffers.

Latch 870 is a 373-type octal D-type flip-flop which controls an address bus 872 in response to a signal from microprocessor 800. The signal on address bus 872 provides the alternative address to RAM 830 via multiplexer 820. The signal on line 872 also provides eight bits of address to ROM 840. ROM is two units of 2KX8 bit memories such as a 2716-type read only memory. Each unit is addressed by the eight address lines of bus 872 and three additional address lines from microprocessor 800. An enable signal from the microprocessor enables one or the other of these units. ROM 840 stores the operating programme for the communications module.

UART 880 illustratively is an 8250 serial to parallel interface. It produces a serial data output signal along with conventional EIA-type request to send and data terminal ready signals. It can receive a serial data signal from a communication channel and can respond to the EIA-type clear to send and data set ready signals. Because of the microprocessor control of the communication module, the data transmission rate can be programmed into the module by the intelligent keyboard/display. Rates of 110, 150, 300, 600, 1200, 2400,4800 or 9600 Baud can be selected. In addition, one or two stop bits, the use of a parity check and odd or even parity can be selected.

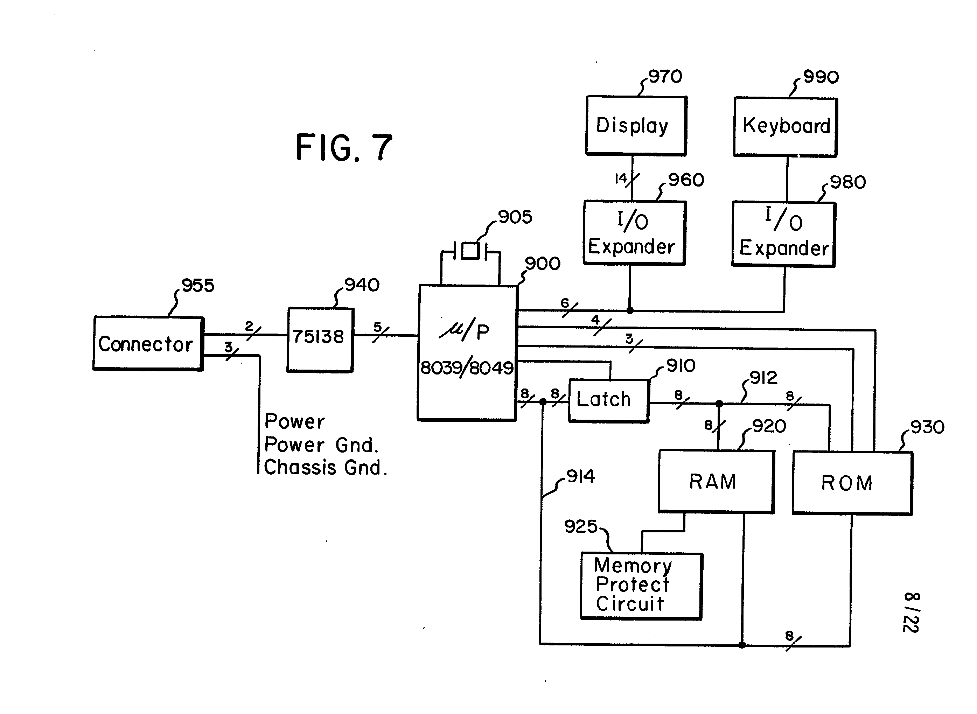

A schematic diagram appropriate to any one of intelligent keyboard displays 12,22,32 is set forth in Figure 7. As shown thereon, the keyboard display comprises a microprocessor 900, a latch 910, a random access memory (RAM) 920, a memory protection circuit 925, a read only memory (ROM) 930, I/O expanders 960, 980, a display 970 and a keyboard 990. In addition, the key board display comprises a communication multiplexer 940 and a connector 955.

The microprocessor 900 may for example, be an 8039/8049 Intel microprocessor with a six Mhz clock crystal 905. Latch 910 is a 373-type octal D-type flip-flop which controls an address bus 912 in response to a signal from microprocessor 900. Address bus 912 provides eight bits of address to RAM 920 and ROM 930. Data from these units is returned to microprocessor 900 on an eight bit parallel data bus 914. RAM 920 is a pair of 5101-type 256 X 4 bit CMOS memory chips connected together to provide 256 bytes of random access storage. Two control lines from microprocessor 900 control the operation of writing into and reading from these chips. RAM 920 permits data to be copied between the intelligent keyboard/display and an SLC instrument such as a controller or a recorder. The stored data is protected against power failure by a long-life battery in memory protection circuit 925. ROM 930 is four units of 2K X 8 bit memory such as a 2716-type read only memory. Each ROM unit is addressed by the eight address lines of bus 912 and three
additional address lines. Four additional lines
sslect the individual ROM chip. The operating
program for the intelligent keyboard/display is
stored in ROM 930. This program scans keyboard
990, debounces the signal from a key and generates a
code for the particular key depressed. Several
look-up tables, one for each different type of SLC
instrument, are stored in ROM so that the code is
interpreted in accordance with the instrument to
which the keyboard/display is connected. The
program , also provides for the display of one or
more characters at specified positions on display
and controls required to send and receive serial
data through connector 955.

I/O expanders 960, 980 are 8243-type coder/
decoders capable of producing an output signal on
one of sixteen lines on the decoded side of the
expander in accordance with a four bit signal received
on the coded side and capable of producing a four bit
coded output signal on the coded side of the expander
in response to a signal received on one of sixteen
lines on the uncoded side of the expander. I/O expander
960 provides an interface to display 970; and I/O
expander 980 provides an interface to keyboard 990.
Display 970 is an eight character alphanumeric display which illustratively is supplied by a pair of
Litronics DL1414 display chips. Keyboard 990 is a

0057541

nine row by five column Texas Instruments keyboard.
Communications multiplexer 940 may like communication multiplexers 140, 400 and 740 of the controller
board, front panel board and auxiliary board, be a 75138-
type multiplexer. Connector 955 is adapted to mate
with connectors 255, 415 and 755 shown in Figures 2,
3 and 5.

The intelligent keyboard/display of Figure 7
provides a means of reading data from and entering data
into any one of the controller board, the front panel
board and the auxiliary board and could also be
connected in a similar manner to another device such
as a recorder. Of particular interest, the keyboard/
display provides a means for displaying many of the
numerous variables which are generated by the microprocessors on those boards or are received as inputs
at those boards. In addition, the keyboard/display
provides a means for selecting many different operating
options of the programs stored on these boards as well
as a means for overriding certain input signals. Thus,
the keyboard/display has the ability to alter the
configuration of the individual controllers selected
by three of panel switches 320. The keyboard/display
also has the capability of reading and storing the
operating configuration of the controller. The configuration can then be read out from the keyboard/display,
and it may be arranged for it to be printed by a suitable
recorder.

To read data from or enter data into a unit, the keyboard/display is first initialized by plugging it into the unit. The keyboard/display will then determine what instrument and model it has been plugged into and will display some unique identifier such as LMR for an L-M-R controller, RECORDR for a recorder, etc. The keyboard/display will then enter an operating mode in which the keys of keyboard 990 have functions that are particularly suited for interaction with the control instrument to which it is connected. For a controller, the keyboard has the labels shown in Table 3. The function of each of these keys is explained in Table 4

To examine any accessible variables, options, etc. the READ function of the keyboard/display is used. One, two or three keystrokes are used to identify the desired variable. A "lower case" key requires one keystroke. Examples are SP for setpoint and OUT for the output. "Upper case" keys require the SHIFT key to be pressed before the variable keystroke. An example is SHIFT DEV for deviation. Finally, some variables are subscripted; these require a number to be entered. Examples of these are DO2 for the second digital output and SHIFT AI 6 for analog input number 6. When a subscripted key is pressed, an underline symbol _ is displayed to prompt the user. if no number is entered, 1 is automatically used. Otherwise, the appropriate number key should be depressed. As the keys are pressed, the display will display the keystroke. This, hereinafter, is called the ID or identifier.

After the variable has been selected, the READ key is pressed.  The intelligent keyboare then obtains the reqested data from the SLC instrument and displays it as follows

= n n n n n I

The equal sign, =, means that the value displayed is the current value.  The next 6 characters (nnnnnn) may be numeric or alphanumeric depending on the variable. If numeric, the first character is either blank or a minus sign.  The next 5 characters are 4 digits plus a decimal point. Numeric values may range from .0001 to 9999.  If alphabetic, up to 4 characters are displayed. Examples are G/M,PSIG, AMPS,V.  If the item is an option, an alphanumericrstring up to seven characters may be displayed.  Examples are 0-5V, LINOP 1, V**1/2.

The last character , I, is a special identifier used with numeric values. The following table describes the various identifiers:

| Identifier | Description |
|---|---|
| blank | a unitless value (e.g., a ratio) |
| V | volts (e.g., an analog input) |
| % | percentage, most values are displayed in % |
| P | identifies the proportional constant used in the controller |
| I | identifies the integral constant used in the controller |
| D | identifies the derivative constant used in the controller |
| * | engineering units used with a variable (e.g., PV) |

To display a dynamically changing value such as the process variable the READ key is held down. New values will then be displayed by the intelligent keyboard.

The final key associated with the read function is ID, This key will display the identifier of the currently displayed variable on the display. For example, if a local setpoint value is displayed and 10 is pressed, the display will change to LSP.

The ENTER function is used to change various values, options, etc. in the SLC instruments. To enter a new value, the variable must first be read and displayed as above.

To change a numeric value the following procedure is used:

- 27 -

1. Press CLEAR. A zero is displayed

2. Use the numeric keys (0 through 9, decimal point and' +/-) to enter the new value. Up to 4 digits may be entered.

3. Press SHIFT ENTER. An equal sign = will be displayed to the left of the velue (after a short delay) indicating that the new value was entered into the SLC instrument.

If a mistake is made in step 2 or 3, CLEAR is pressed and a new value is entered. The variable is not changed until ENTER is pressed and the equal sign is displayed. If varification is desired, CLEAR is pressed to clear the display, followed by READ to display the current value.

Some variables are read-only because they cannot be changed from the intelligent keyboard. Examples are analog inputs and calculated variables. The read-only items continue to be displayed if CLEAR is pressed. This informs the user that the variable is read-only.

Certain variables have been made more difficult to change in order to prevent the operators from inadvertently reconfiguring the SLC instrument. These variables are usually changed only by qualified personnel. To change a protected variable, if necessary first to read it; then to press SHIFT AUTH. CLR, then to enter the value (or slew it), and finally to press SHIFT ENTER to enter it. The equal·sign will again be displayed to indicate that the change was made. If this procedure is not followed, the variable will not be changed.

The intelligent keyboard also has a slewing feature which performs 2 distinct functions: changing numeric variables, and selecting non-numeric variables. Two keys, raise,↑, and lower,↓, are used for slewing

For numeric slewing any changable numeric value may be slewed. The advantage of slewing over entry of a new value is that a large bump is prevented. The rate at which the variable is slewed depends on the type of variable, its current value and the activity on the communication bus of the system. By pressing the SHIFT key along with raise,↑, or lower,↓, the variable will slew at 15 times the slow slew rate.

Where the slewing is associated with analog output or stepper output the rate is approximately 1%/second for a slow slew, and 15%/second for fast. For variables represented in percent and for variables with engineering units, the slow slew is a fixed value approximately 1% of full scale per second. Finally, for unitless variables, a fixed increment is added to the value as a function of the value:

| current value | increment |
|---|---|
| V < 1 | 0.0001 |
| 1 < V < 10 | 0.01 |
| 10 < V < 100 | 0.01 |
| 100 < V < 1000 | 0.1 |
| 1000 < V | 1.0 |

Again the fast slew is 15 5imes the slow slew increment.

The slew rates that have been quoted assume that no other communication is occurring. If there is other communication (such as updating the controller's bar graph display) the slew rates will slow down to approximately 1/2 or 1/3 of the stated rated.

Certain keys refer to features and options that can have several possible states. When the appropriate key is pressed to dispaly such a feature or option, the display will be:

= a a a a a a x,

where a a a a a a is a 1 to 6 character identifier for the section and x is either a blank if the identi-,fier refers to the currently active state of the feature or option or a question mark if the identifier refers

to an alternative state.  To change the setting,
the slew keys are used to get the desired option into
the display.  Next SHIFT and ENTER are pressed.
After a short delay. the question mark will disappear
to indicate that the setting has been selected.

For example, the analog output ## 3 of the controller
may be used for output, setpoint (SP), process variable
(PV) or be turned off.  If, say, it is set for output
but PV is desired, the user may press the key sequence
shown in Table 5.

A key labelled NEXT is provided to allow stepping
through all of the variables, constants and options in
an SLC instrument's data base.  This function will
reduce the number of keystrokes necessary for the
user to view all of the data.  When NEXT is pressed,
the identifier for the next item is displayed.  Typically,
the user will alternately press NEXT and READ to view
all of the data.  When the last item is reached, the
NEXT function will stop operating.   Table 6 indicates the
display that can be generated by repeated use of the NEXT
key.

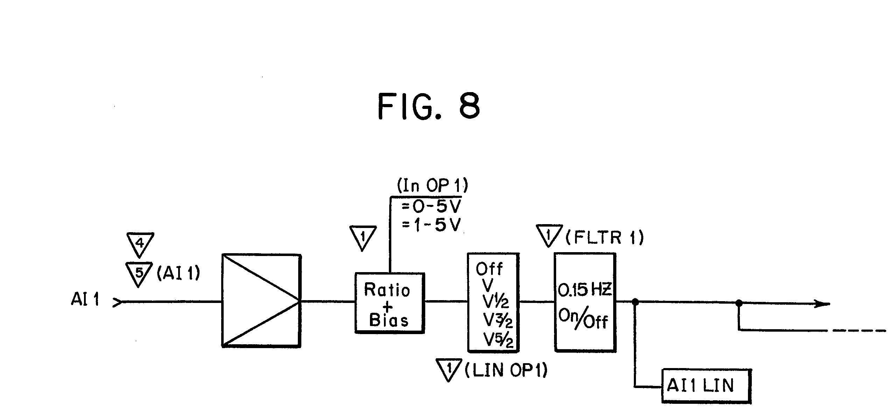

The intelligent keyboard/diplay units that have been
described may be associated with a recorder in a way that
will be described later, but the foregoing elements
can be configured in numerous ways to define any one
of the seven types of controllers enumerated earlier
and to provide numerous options and features.  Some
of these features Will be apparent from Table 7 which lists
the analog and digital inputs and outputs to the seven types
of controller and from the discussion of  Figures 8-17 which
provide a software block diagram for the controller.

Block diagrams depicting the software that is used by the controller board to control a process are set forth in Figs. 8-17. Throughout these figures a number in a triangle is used to indicate the source of certain control inputs or to provide comments about the signal. The number 1 indicates that the source is the intelligent keyboard/display or the serial communication module. The key on the keyboard of the keyboard-display which controls the input is identified in brackets. The number 2 indicates that the signal is derived from switch panel 320 on front panel board 20. The number 3 indicates that the input is derived from one or more of panel switches 210 on control board 10. The number 4 indicates that the signal is one of the analog or digital inputs or outputs to the system. The number 5 indicates that the signal in question is a read only signal that is readable by the keyboard/ display using the key indicated in brackets. Where a choice is to be made between two or more inputs in a software routine, the choice is indicated by a large vertical oval. Appended to a line at the top or bottom of the oval is a legend which indicates the key and/or signal which selects each one of the inputs to the oval. The legends are in the same order as the signal inputs which they select.

All active inputs are read and processed at the controller's loop processing rate, which may be up to ten times per second. Inputs are normally processed regardless of whether they will actually be used by the controller but improved control response may be possible if unused inputs are made inactive.

Fig. 8 depicts the software processing performed by one of the analog inputs to the controller.

The same processing is performed on the other five. Each analog input goes through a 1.5 Hz hardware filter to eliminate electrical noise in input protection and filtering circuit 140. Thereafter the signal is digitized by a high speed successive approximation method having a resolution of twelve bits. Keyboard entries IN OP 1 through IN OP 6 of keyboard/display 12 specify an input signal range of either 0-5V or 1-5V for each of the six analog inputs. The input signal is then ratioed so that the value passed on to the next software processing block has a range of 0.000 to 1.000, corresponding to 0% and 100%. Each analog input can be subjected to one of four linearization algorithms selected by use of the keyboard inputs LIN OP 1 through LIN OP 6. These algorithms are standard zero and scale linearization, square root linearization, three-halves linearization, and five-halves linearization. Next, each linearized analog input may be filtered by an 0.15 Hz filter as specified by keyboard entries FLTR 1 through 6. Six analog input signals are then made available to the other operating blocks of the controller.

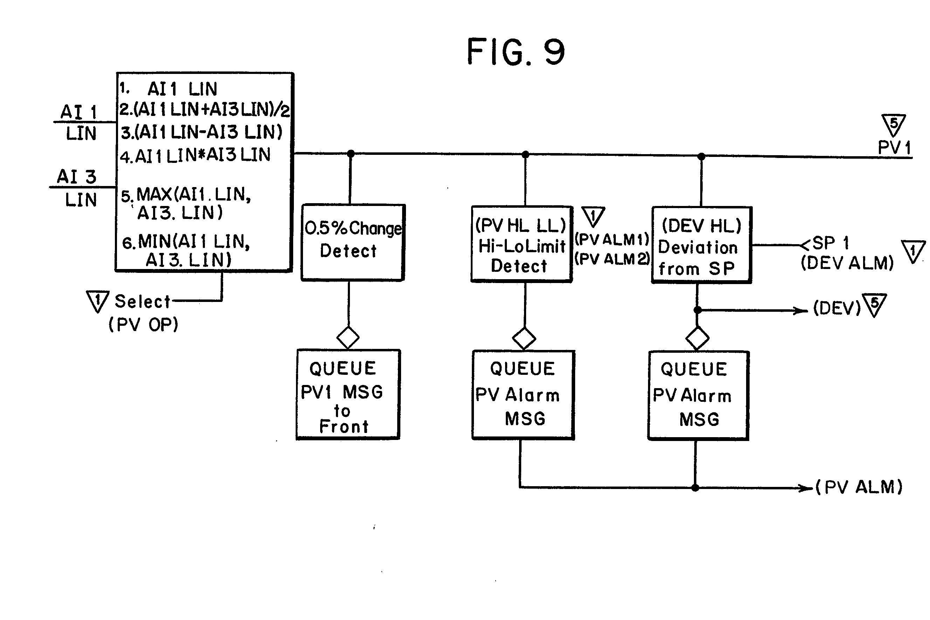

The process variable can be the signal from analog input AI1 or it can be modified as shown in Fig. 9 to be a composite of that signal and the signal from analog input AI3. The key PVOP can be used to select any one of the following signals as the process variable.

$$= AI1$$
$$= AI1 - AI3$$
$$= AI1 \times AI3$$
$$= (AI1 + AI3)/2$$
$$= MAX (AI1, AI3)$$
$$= MIN (AI1, AI3)$$

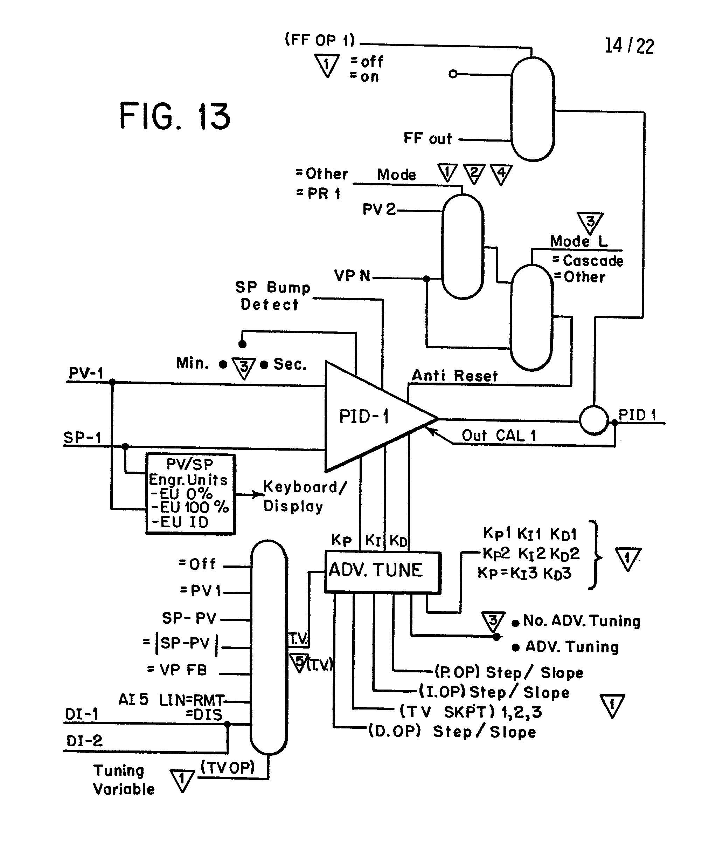

The resulting signal is then tested for several alarm limits. These include a 0.5% change of value, and a value greater than and lower than a limit entered from the keyboard/display by keys PV ALM 1 and PV ALM 2, and a deviation from a set point which can be specified by the key DEV ALM. The process variable is then applied to the PID block (Fig. 13) for calculation of the output.

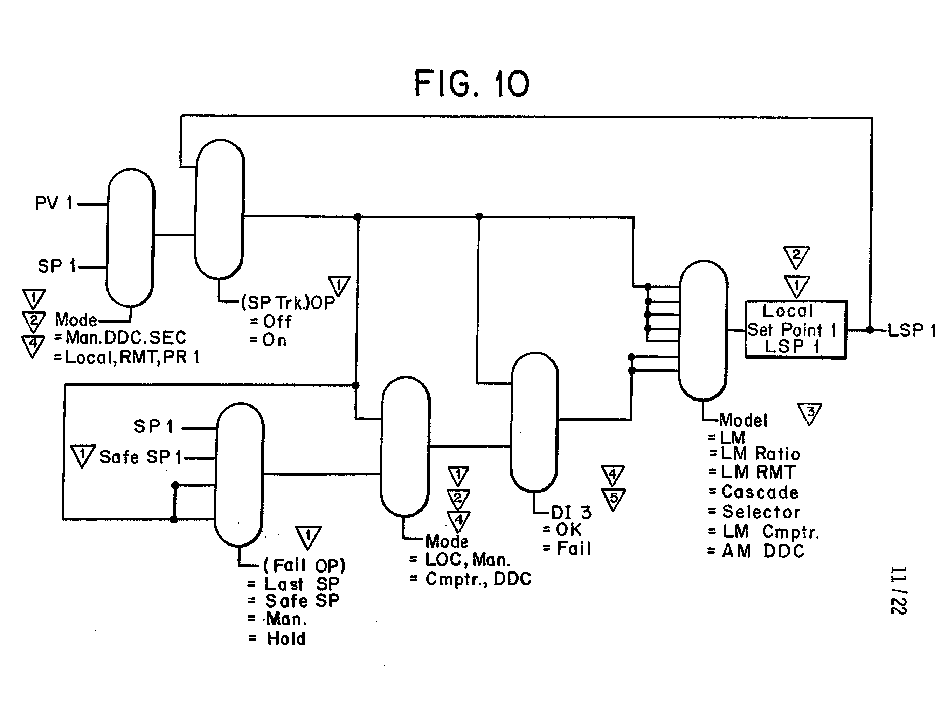

In the LOCAL/MANUAL controller, the LOCAL/MANUAL REMOTE controller, the LOCAL/MANUAL/COMPUTER controller and the LOCAL/RATIO controller, the local setpoint (LSP) is provided as follows for operation in the LOCAL and MANUAL modes. In the LOCAL mode, the local setpoint is used as the controller's setpoint. In the MANUAL (MAN) mode, the local setpoint will track the process variable if setpoint tracking is specified by operation of the TRK OP key on the keyboard/display. The software block diagram which produces the local setpoint signal is set forth in Fig. 10.

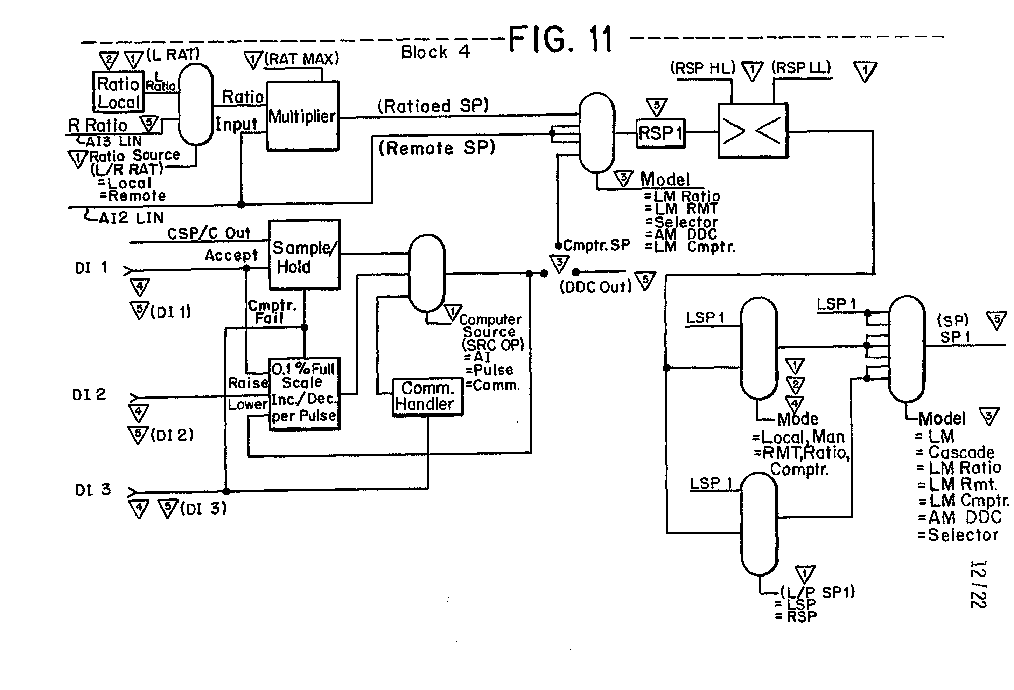

As shown in the upper half of Fig. 11, in the LOCAL/MANUAL/ REMOTE controller, the controller's setpoint in the REMOTE-AUTO mode is the linearized analog input AI2LIN. This value is clamped by a remote setpoint lower limit (RSP LL) and a remote setpoint upper limit (RSP HL) entered by the keyboard/display. In the REMOTE-AUTO mode the local setpoint will track the remote setpoint if setpoint tracking is specified by the key SP TRK. Otherwise, the local setpoint will remain unchanged.

In the LOCAL/MANUAL/COMPUTER controller, the setpoint is supplied by the computer when in the COMPUTER-AUTO mode. Three algorithms shown in the bottom left-hand side of Fig. 11 are available for generating

0057541

- 34 -

the setpoint. With the positional algorithm, the setpoint is updated by a signal from the computer that is applied to the controller via linearized analog input AI2 LIN when digital input (DI1) is true for a specified period of time and the computer fail input (DI3) is inactive. The setpoint is updated by a sample and hold routine. In accordance with a velocity algorithm, the setpoint is raised 0.1% of full scale for each DI1 pulse received and lowered 0.1% of full scale for each DI2 pulse received, provided the computer fail input is inactive. In the communication algorithm the set point is updated with the value contained within an "Update SP" message received through the serial communication module 16. Any one of these three algorithms may be selected by the key SRC OP on the keyboard/ display. If setpoint tracking is specified, the setpoint will track the computer setpoint.

In the AUTO/MANUAL/ DDC controller, the controller's setpoint may be specified to be either the local setpoint or the linearized analog input AI2 IN, the choice being made by the key L/R SP on the keyboard/ display. If the controller is in the AUTO mode with an analog input and setpoint tracking specified, the local setpoint will track the remote setpoint; otherwise it will remain unchanged. In the MANUAL and DDC modes, the local setpoint will track the process variable if setpoint tracking is specified.

In the LOCAL/MANUAL/RATIO controller, the controller's setpoint is the product of the linearized analog input AI2 LIN and either the local ratio (L RAT) or another analog input (AI3LIN) called the remote ratio (R RAT) as shown in the upper left hand corner of Fig. 11. The choice of multipliers is selected by the key L/R RAT on the keyboard/display. In the RATIO/ AUTO mode the local ratio will track the ratioed setpoint if setpoint tracking is specified. Otherwise the local setpoint will remain unchanged.

In the CASCADE controller the primary controller's setpoint is the local setpoint (LSP1). In the MANUAL mode, this local setpoint will track process variable PV1 if setpoint tracking is specified. Otherwise, the setpoint will remain unchanged. In the CASCADE/ AUTO and PRIMARY/AUTO modes, the primary controller's final output (OUT 1) is the setpoint of the secondary controller. In the SECONDARY-AUTO mode, the secondary controller's local setpoint (LSP 2) is used as the secondary controller's set point. In the MANUAL mode, process variable PV 2 is used as a secondary controller's set point. If setpoint tracking is specified in the MANUAL mode, LSP2 will track PV 2.

In the AUTO SELECTOR controller, the first controller's setpoint may be either a local setpoint or a remote setpoint, the choice being made by the key L/R SP 1. If it is the remote setpoint, the signal is provided by the linearized analog input AI2 LIN. In the MANUAL mode, LSP 1 will track the process variable PV1 if setpoint tracking is specified. Otherwise, the local setpoint will remain unchanged. In all other modes, if the controller's setpoint is the analog input and setpoint tracking is specified, then the local setpoint will track the remote setpoint provided by the analog input. Controller 2 is configured in the same manner as controller 1. The key L/R SP 2 on the keyboard display specifies whether local setpoint LSP 2 or the linearized clamped analog input AI5 LIN is to be used as its setpoint. In the MANUAL mode, LSP 2 will track process variable PV2 if setpoint tracking is specified. There is no provision to permit LSP 2 to track a remote setpoint.

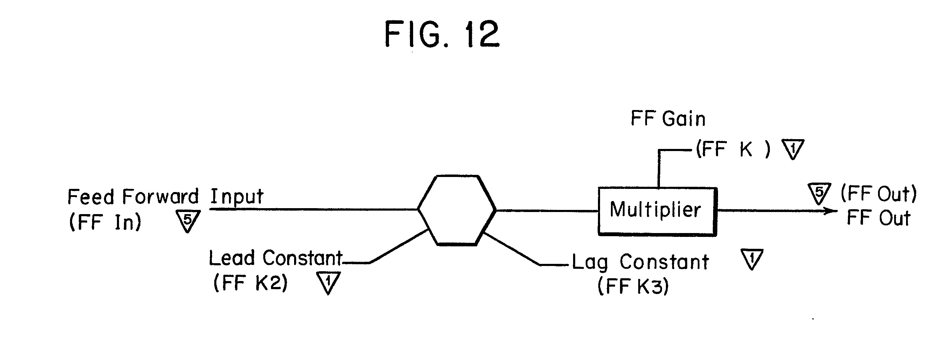

Feedforward control can be used to control processes with long reponse characteristics where the response of the process to a known load disturbance is of a predictable nature. In a feedforward system, a secondary process variable AI3 or FF signal is utilized along with the primary process variable (PV) to improve the overall control action. In general, FF is a measured parameter whose value changes almost instantly with a load disturbance, while PV is a parameter whose value is controlled at the setpoint level and is not immediately affected by the change. While the feedforward input remains constant, no Feedforward action will occur. As long as FF is not changing, the module will produce an FF output signal of zero. Should a sudden load disturbance occur, FF out will go above or below zero, thus permitting feedforward action to bias the controller's output. The time delay before the correction is applied and the correction's magnitude, sense (i.e. direct/reverse) and duration are all configurable. Once the disturbance is corrected, AI3 will become stable and unchanging and normal controller action is resumed. In this manner, the effects of the disturbance are anticipated by AI3, thereby reducing the time required for PV to stabilize. The feedforward processing is depicted in Fig. 12.

Fig. 13 illustrates the calculation of the PID algorithm. The algorithm is a "velocity" PID algorithm with built-in anti-reset windup protection and rate limiting. The algorithm is of the "interacting" type but permits integral-only action.

The algorithm is as follows:

```
Filt.PV := PV*k + (1-k)*Filt.PV.hist
Delt.PV := Filt.PV - Filt.PV.hist
Delt.OUT := Delt.P + Delt.I + Delt.D
where Delt.P, Delt.I, Delt.D are calculated
as follows :
Delt.P
-------
Delt.P := Kp*Delt.PV
Delt.D
-------
Delt.D := Kp*Kd*(Delt.PV - Delt.PV.Hist)
Delt.I
-------
BEGIN
if Ki = 0
Delt.I := SP - Filt.PV
else
Delt.I := (SP - Filt.PV)/Ki
endif
if OUT > OUT.HL and Delt.I > 0 or
if OUT < OUT.LL and Delt.I < 0 or
if override and OUT > AI4.LIN and Delt.I > 0 or
if override and OUT < AI5.LIN and Delt.I < 0 or
if inhib.raise active and Delt.I > 0 or
if inhib.lower active and Delt.I < 0 or
if abs(valve.error) > MAX.VALVE.ERROR
   and
   sign (valve,error).NE. sign(Delt.I)
then
   Delt.I := 0
else
   if KP .NE. 0
     Delt.I := Kp*Delt.I
   endif
   if FEEDFORWARD is on
     Delt.I := Delt.I + Delt.FFOUT
   endif
endif
END
```

In accordance with the invention, up to three sets of PID tuning parameters, KP, KI and KD can be selected for use as an advanced tuning feature in the PID algorithm. These sets are selected in accordance with one of the following independent variables: process variable PV1, the deviation between the setpoint and the process variable, the absolute value of the deviation, the valve position feedback, an analog input supplied through AI5 LIN or two external digital inputs. The particular value used is selected by the TV OP key on the keyboard/display. The three sets of tuning parameters may be entered through the keyboard/display using the KP, KI and KD keys. Three breakpoints determining the ranges over which these constants are used may be entered by the TV BKPT key. In addition, a step and slope option may be selected for KI, KP, and KD by the I OP, P OP, D OP keys, respectively.

If the tuning variable is a digital input, only the step option applies. If both digital inputs are high, then KP1, KI1 and KD1 are selected. If the first digital input is high and the second low, then KP2, KI2 and KD2 are selected. If the first digital input is low, KP3, KI3 and KD 3 are selected. Otherwise, for the step option the PID tuning parameters are selected in accordance with the following:

If TV <Breakpoint 1, then K = K1;

If Breakpoint 1 <TV<Breakpoint 2, then K = K2;

If Breakpoint 2 <TV, then K = K3.

The slope option allows the tuning parameter to be a linear function of the input variable. The PID values, KP, KI and KD are selected by the slope option in accordance with the following criteria:

If TV <Breakpoint 1, then K = K1

If Breakpoint 1 <TV<Breakpoint 2, then

  K = linear function (value between K1 and K2)

If Breakpoint 2 = TV, then K = K2

If Breakpoint 2 <TV <Breakpoint 3, then

  K = linear function (value between K2 and K3)

If Breakpoint 3 < TV, then K = K3

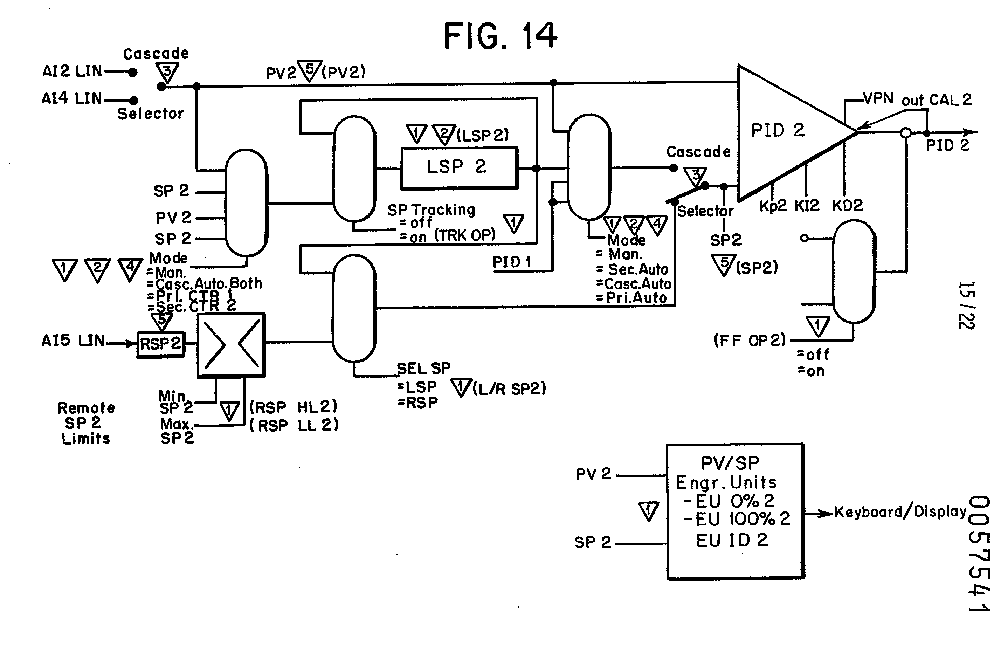

The cascade and auto selector controllers have a second PID controller shown in Fig. 14. This controller uses the same algorithms as the controllers of Fig. 13 and contains the same features except for advanced tuning. The controller uses the PID2 constants KP2, KI2 and KD2 which can be entered through the keyboard/display. For the cascade model the process variable is AI2 LIN and the setpoint can be any one of a number of setpoints depending on the mode of operation of the controller. For the AUTO SELECTOR mode the process variable is AI4 LIN and the setpoint is either LSP2 or is provided through AI5 LIN.

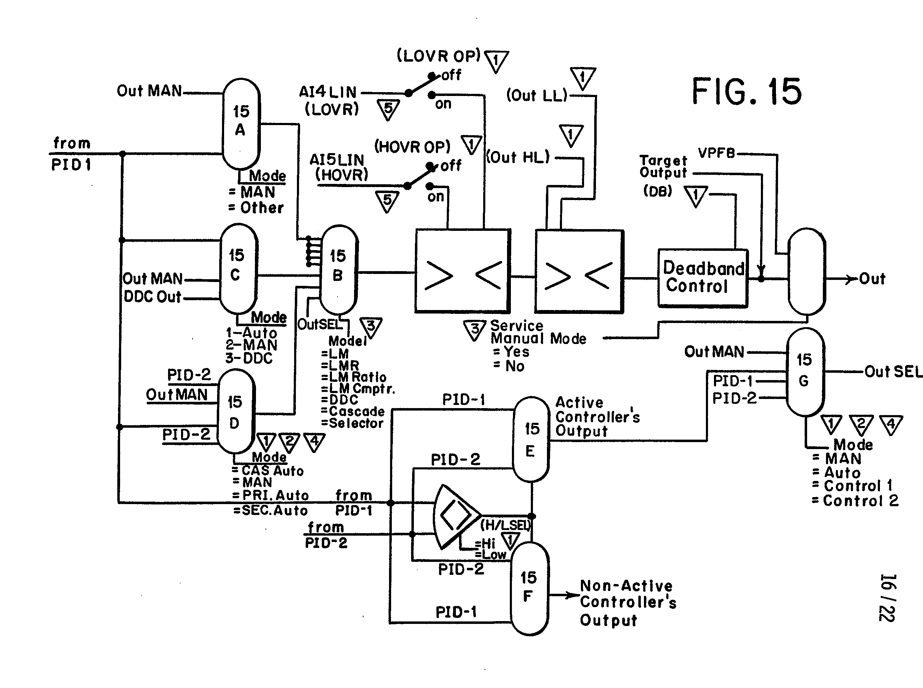

The output of the PID algorithm is processed by the block diagram of Fig. 15. In the MANUAL Mode, the output signal is provided by OUTMAN. Otherwise for all controllers except DDC, CASCADE and AUTO SELECTOR, block 15B selects the output of the PID algorithm as the output of the controller subject to mode selection and overrides.

Block 15C provides signal selection for the DDC controller. In the AUTO mode the output from PID1 is the controller's output. In the DDC mode the output value is supplied directly by a computer.

Block 15D describes output selection for the cascade controller. Unless the mode is PRI AUTO, the controller's output is the output from PID2. In the PRI AUTO mode the controller's output is that from PID1.

Blocks 15E and 15F control the output for the auto selector controller. In the AUTO mode the output is the higher or lower of the output of the two controllers, the choice being specified by the key H/L SEL on the keyboard/display. In the CONTR1 mode, PID1 supplies the output; and in the CONTR2 mode, PID2 supplies the output, as indicated by block 15G.

High and low overrides can be configured by the keyboard entry H OVR OP and L OVR OP. For the high override the output is the minimum of the calculated output and the analog input AI5LIN. For the low override the output is the maximum of the calculated output and the analog input AI4 LIN. The output signal is also subject to output clamping specified by the keyboard/display keys OUT HL and OUT LL.

Finally, a dead band control can be specified by the key DB. When such control is specified, the output of the controller will not change unless the calculated output differs from the current output by the dead band amount. Use of dead band control reduces valve wear by eliminating valve movements that are smaller than the dead band amount. The dead band may be set at any value between 0 and 100%.

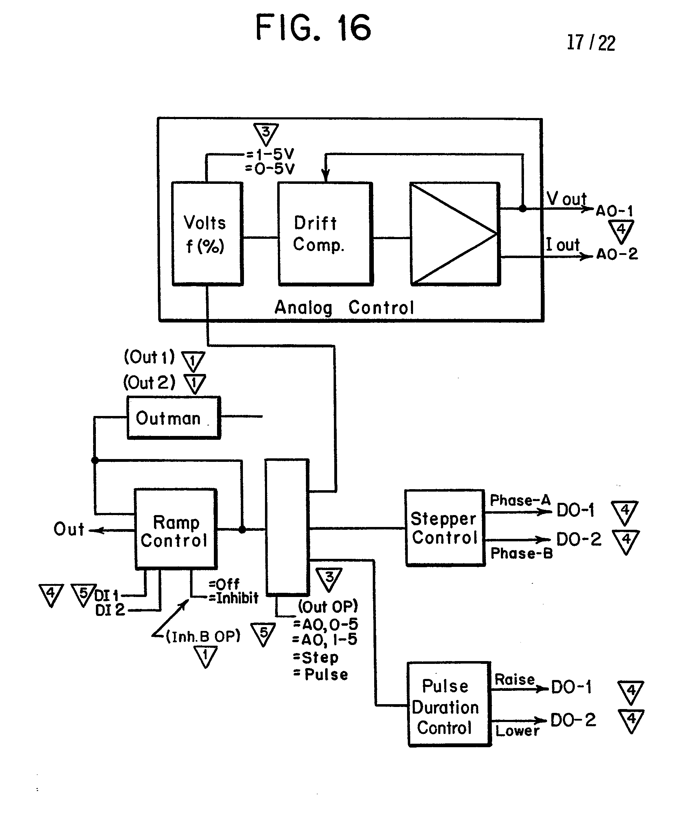

Fig. 16 depicts the hardware/software mechanism for ramping the controller's output OUT 1 from its existing value to the target output value calculated by the controller and for maintaining that target value. The functions within this block execute at a much faster rate than the normal 100 ms loop update period. Analog sample and hold circuit 200 of Fig. 2 is refreshed every 12.5 ms, or 8 times per loop update. For each refresh, 1/8 of the difference between the old and new output values is sent to the sample and hold circuit so that the output appears to ramp to the new value rather than making one discrete step of the entire change. The ramp control shown in Fig. 16 inherently limits the ramp rate to 100% per second, a rate that can be followed by most actuators.

If "Inhibit Raise/Lower" is configured by the keyboard entry INHB OP, then a raise operation will be terminated whenever the INHB R signal is in the Logic 0 state. DI4 is the INHB R signal in the CMPTR and DDC Controllers. DI1 is the INHB R signal in all other Controllers. The INHB R signal is normally configured in conjunction with the Stepper and Pulse Duration Output options. It may also be configured with the analog output option to provide a "digital" high override.

If INHB OP is active, then a lower operation will be terminated whenever the INHB L signal is in the Logic O state. DI5 is the INHB L signal in the CMPTR and DDC models. DI2 is the INHB L signal in all other models. The INHB L signal is normally configured in conjunction with the Stepper and Pulse Duration Output options. It may also be configured with the analog output option to provide a "digital" low override.

Advantageously, the controller's actual output is read through multiplexer 150 to allow drift-compensation and offset correction of the analog output. The sample/hold analog output circuitry is refreshed every 12.5 milliseconds. The output value is adjusted as required over the next loop update period to ramp the output to the new target value. One of switches 210 specifies the full scale output range to be either 0-5 Volts (0-20mA) or 1-5 Volts (4-20 mA).

If the Stepper control is selected by switches, the phase A and phase B digital outputs (OUT 1 and OUT 2) are sequenced over the next loop processing period as required to step the Stepper Actuator to the new target angular position. Maximum step rate is 1 step every 5 milliseconds or 200 steps per second (10 second full scale response).

If the pulse duration control is selected and if a RAISE is required, digital outputs OUT 1 and OUT 2 are set to the 0 and 1 states. If a LOWER is required, OUT 1 and OUT 2 are set to the 1 and 0 states. If no change is required, the outputs are both set to the 1 state. Actuator full scale response time is 10 sec; and Pulse duration resolution is 10 milliseconds.

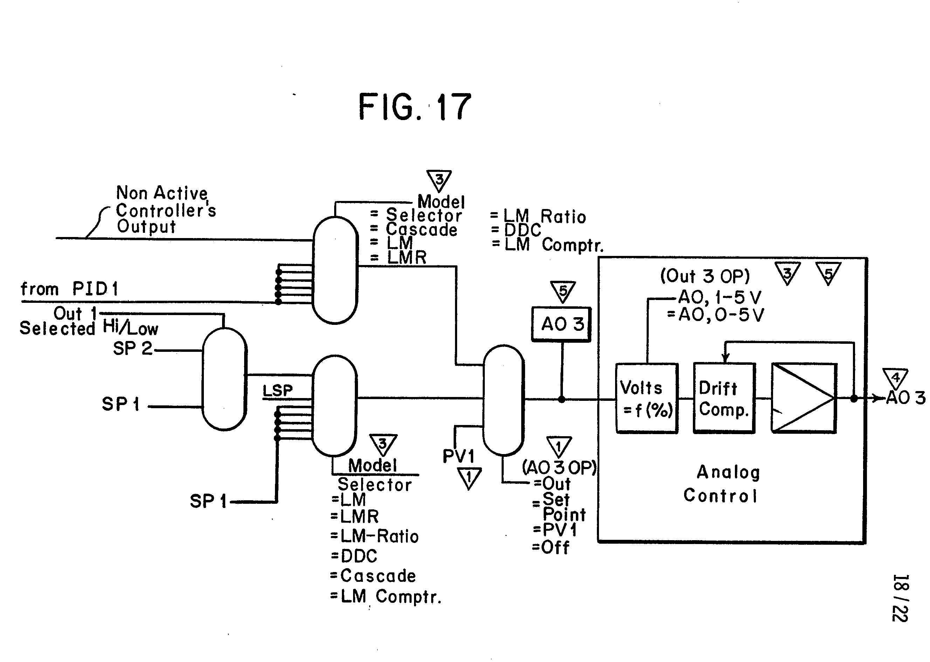

An auxiliary output A03 is also available as shown in Fig. 17. One of hardware switches 210 sets the range of this output to either 0-5 volts or 1-5 volts. As in the case of OUT 1, the sample & hold circuitry is refreshed every 12 milliseconds and drift compensation is performed. However, A03 is not ramped. One of three variables OUT, SET POINT and PV1 can be selected to drive the auxiliary output by the A03 OP key. By selecting A03 OPT = OUT for the AUTO SELECTOR controller, A0 3 is the unclamped output of either controller 1 or controller 2, whichever was not selected as the main output OUT1. For all other models, A03 is the unclamped output of controller 1. By selecting A03 OP = SP for the AUTO SELECTOR controller A03 is the setpoint of the controller whose output was selected as the main output. For the COMPUTER controller, the clamped remote setpoint will be sent out; and for all other models, the local setpoint LSP is used. For A03 OP = PV 1, process variable PV1 is the output. PV1 may be a calculated value such as the average of two analog inputs.

- 44 -

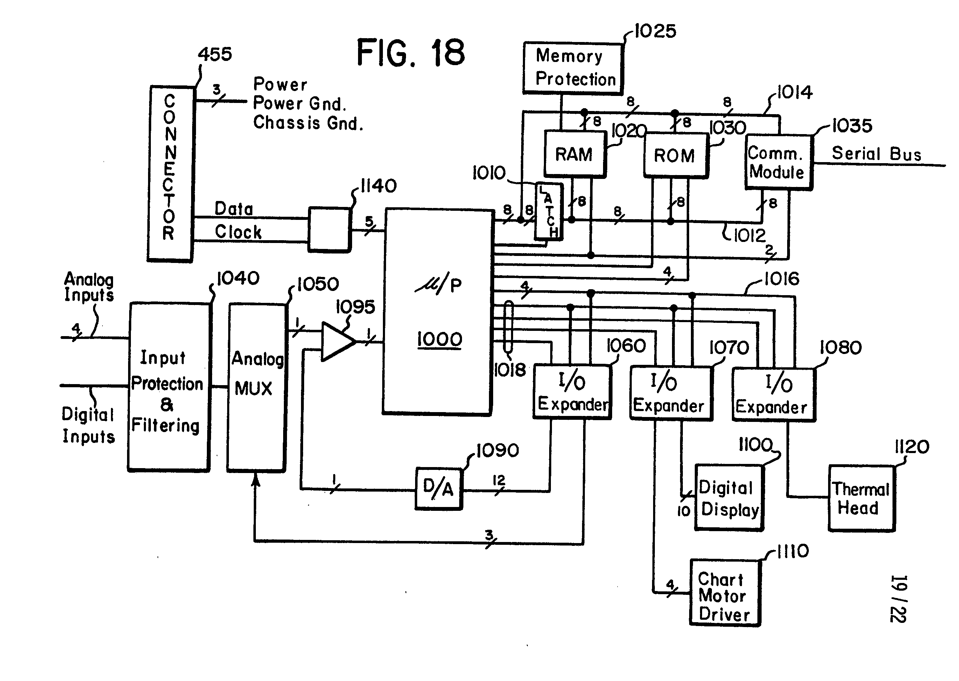

Figure 18 is a block diagram illustrating a recorder
which may be used with an intelligent keyboard/display
to print alphanumeric or graphic displays.  As shown
therein, the recorder comprises a micorprocessor 1000,
a latch 1010, a random access memory (RAM)1020, a memory
protection circuit 1025, a read only memory (ROM) 1030,
a serial communication module 1035, an input protection
and filtering circuit 1040, an analog multiplexer 1050,
I/O expanders 1060, 1070, 1080, a digital to analog
converter 1090, a comparator 1095, a digital display 1100
a chart motor driver 1110, a thermal printing head 1120
communications multiplexer 1140 and connector 115.

In this particular embodiment, microprocessor 1000
is an Intel 8039/8040 microprocessor.  Latch 1010 is a
373-type octal D-type  flip-flop which controls an address
bus 1012 in response to a signal from microprocessor 1000.
Address bus 1012 provides eight bits of address to RAM 1020,
ROM 1030 and the communication module 1035.  Data from these
units is returned to microprocessor 1000 on an eight bit
parallel data bus 1014.  RAM 1020 is a pair of 5101-type
256 X 4 bit CMOS memory chips connected together to provide
256 bytes of random access storage.  Two control lines
from microprocessor 1000 control the operation of writing
into and reading from these chips.  RAM 1020 is used for
temporary storage of data that is to be printed by the
recorder and configuration data.  The stored data is protected against power failure by a long-life battery in memory
protection circuit 1025 , ROM 1030 is three units 2K X 8
bit memory such as a 2716-type read only memory.  Each
ROM unit is addressed additional address lines.  Two
additional lines plus control logic (not shown)  select
the individual ROM chip.  The operating program for the
recorder is stored in ROM 1030.

There are up to four analog and three digital
inputs to the recorder. Protection against voltage
excursions and high-frequency transients is provided by
input protection and filtering circuit 1040. The
filtered analog and digital signals are applied to analog
multiplexer 1050. Multiplexer 1050 illustratively is
a 4051-type one-out-of-eight multiplexer whose output
is selected by three of the lines from I/O expander 1060.
The analog output of multiplexer 1050 is converted
to a digital signal by means of twelve bit digital-to-
analog converter 1090, comparator 1095 and a standard
analog-to-digital programming routine which is
executed by microprocessor 1000. Digital signals may
also be supplied to the recorder by the communication
module which is similar to the module 16 shown in
Figure 1.

I/O expanders 1060, 1070, 1080 are connected to
microprocessor 1000 via data bus 1016 and select lines
1018. I/O expander 1070 provides for signal outputs to
digital display 1100 and chart motor drive 1110. I/O
expander 1080 provides for signal outputs to thermal
printing head 1120.

Communication multiplexer 1140 is a 75138-type
multiplexer which is used to multiplex incoming and
outgoing clock and data signals. Connector 1155 mates
with connector 955 (see Figure 7) of the intelligent
keyboard/display and provides for the transmission of
clock and data signals to and from the intelligent
keyboard/display.

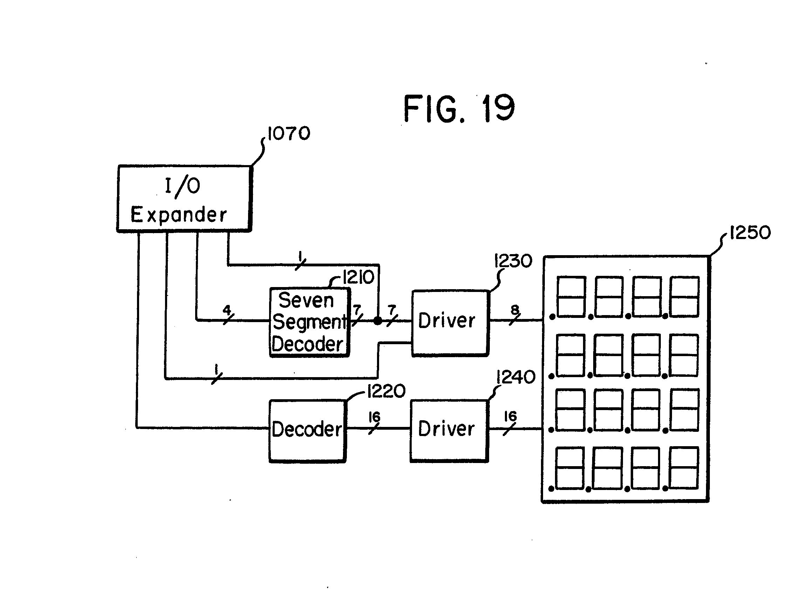

Digital display 1100 is illustrated in greater detail in Figure 19. As shown therein, the digital display comprises a seven segment decoder 1210, a decoder 1220,drivers 1230, 1240 and a display 1250 capable of displaying four groups of four digits each. As shown in Figure 19,each digit is represented by a seven segment display; and a decimal point can be located to the left of any one of the four digits in a row. Decoder 1220 has four signal input lines and sixteen signal output lines. In response to a four bit parallel input signal, it strobes one of the sixteen different digits of display 1250 so as to illuminate the segments of the seven segment display of that digit in accordance with the signals from seven segment decoder 1210. The seven segment decoder 1210 has four inputs which specify the ten numeric digit plus special symbols. The seven outputs of decoder 1210 specify which of the seven segments of the display of a given character are illuminated. The eighth line which is applied directly to driver 1230 controls the display of the decimal point. In order to display a minus sign, the central horizontal bar of the seven segment display can be controlled from the microprocessor. Seven segment decoder 1210 may be a 47-type BCD-to-7-segment decoder and decoder 1220 a 4514 decoder. The seven segment drivers 1230 may be a pair of 2907-type drivers and the digit select drivers 1240 may be a pair of 2813-type drivers.

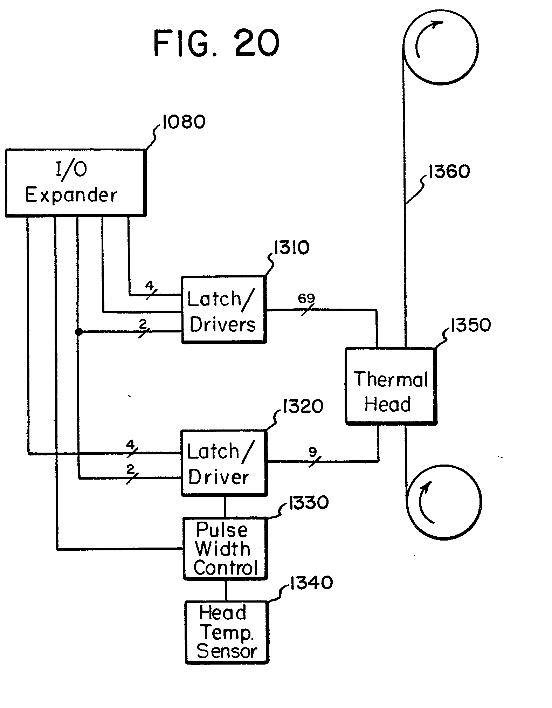

The thermal printing head 1120 is depicted in greater detail in Figure 20. As shown therein, the printing head comprises a set of latch/drivers 1310, a set of latch/ drivers 1320, a pulse width control 1330, a thermal head temperature sensor 1340 and a thermal printing head 1350.

The thermal printing head may, for example, be a commercial device such as the DM 69414 printing head manufactured by Gulton Industries, Inc. of Metuchen, New Jersey. This printing head contains a single continuous row of printing elements spaced so as to print one hundred dots per inch on a strip that is slightly more than four inches wide. The printing head uses a total of sixty-nine address lines and nine strobed lines to deliver to the individual printing elements sufficient current to print visible indicia on a tecording medium 1360, such as a thermal paper. Latch/drivers 1310 consist of an array of latches and drivers suitable for driving the sixty-nine address lines. Latch/predrivers 1320 provide an array of latches and drivers suitable for driving the strobe lines.

Advantageously the intensity, or gray scale, of the print may be controlled by means of thermal head temperature sensor 1340 and pulse width control 1330. The intensity of the printed indicia will decrease with decreasing ambient temperature of the thermal head. To compensate for this, it has been found advantageous to adjust the length of the electrical pulse used for printing.

To read data from or enter data into the recorder of Figure 18, the intelligent keyboard/display is plugged into the recorder by mating connectors 955 (Figure 7) and 1155 (Figure 8). The keyboard/display will then determine that it has been connected to a recorder and will display RECORDR on display 970. At the same time the keyboard/display selects the recorder operating program which defines the keys of keyboard 990

- 48 -

as shown in Table 8. The keyboard sequence and display sequence in response thereto and explanatory comments relating to these keys are set forth in Table 9.

One particular application to which the combination of keyboard/display and recorder may be put is the hard copy printout of data stored in random access memory 920 of the keyboard/display. Data may be stored in RAM 920 from any single loop control instrument to which the keyboard/display is connected. The data may then be read from the keyboard display into RAM 1020 of the recorder. In accordance with programming routines) stored in ROM 1030 of the recorder, the contents of RAM 1020 may then be printed by thermal printing head 1120 on an appropriate recording medium 1360. Advantageously, the keys of the keyboard/display can also be configured as an alphanumeric keyboard for entry of text onto the hard copy output of the recorder.

From the program description it will be apparent that the intelligent keyboard/display provides a versatile device but can be used for reading data from and entering data into different computer controlled instruments. Of particular interest, the keyboard/display provides a means for reconfiguring these instruments by selecting various options, a means for determining the particular options selected and a means for storing the configuration of a parricular instrument. Finally, in connection with a recorder the keyboard/display may be used to provide hard copy output.

- 49 -

TABLE 1

| Local/ Manual | Local/ Manual/ Remote | Local/ Manual/ Computer | Auto/ Manual/ DDC | Local/ Manual/ Ratio | Cascade | Auto Selector |
|---|---|---|---|---|---|---|
| SERVICE MANUAL | SERVICE MANUAL | SERVICE MANUAL | SERVICE MANUAL | SERVICE MANUAL | SERVICE MANUAL | SERVICE MANUAL |
| LOCAL AUTO | LOCAL AUTO | LOCAL AUTO | AUTO | LOCAL AUTO | CASCADE | AUTO |
| MANUAL | MANUAL | MANUAL | MANUAL | MANUAL | MANUAL | MANUAL |
| - | REMOTE AUTO | COMPUTER AUTO | DDC | RATIO AUTO | PRIMARY AUTO | CONTROL LER 1 |
| - | - | - | - | - | SECON- DARY AUTO | CONTROL- LER 2 |

## TABLE 2

| Switch Activated | Resultant Mode | Left Bar Display | Right Bar Display | Variable Sub-ject to slew |
|---|---|---|---|---|
| | **Local/Manual Controller** | | | |
| LOCAL-AUTO | LOCAL | PV | SP | SP |
| MAN | MANUAL | PV | Output | Output |
| SP | - | PV | SP | SP |
| OUT | _ | PV | Output | Output (only if in MANUAL mode) |
| | **Local/Manual/Remote Controller** | | | |
| LOCAL-AUTO | LOCAL | PV | Local SP | Local SP |
| MAN | MANUAL | PV | Output | Output |
| RMT-AUTO | REMOTE | PV | Remote SP | None |
| SP | - | PV | Local SP | Local SP |
| OUT | - | PV | Output | Output (only if in MANUAL mode) |
| RSP | - | PV | Remote SP | None |
| | **Local/Manual/Computer Controller** | | | |
| LOCAL-AUTO | LOCAL | PV | Local SP | Local SP |
| MAN | MANUAL | PV | Output | Output |
| CMPTR-AUTO | COMPUTER SP | PV | Computer SP | None |
| SP | - | PV | Local SP | Local SP |
| OUT | - | PV | Output | Output (only if in MANUAL mode) |
| CSP | - | PV | Computer SP | None |

## TABLE 2 (Cont'd)

| Switch Activated | Resultant Mode | Left Bar Display | Right Bar Display | Variable Subject to slew |
|---|---|---|---|---|
| **Auto/Manual/DDC Controller** | | | | |
| LOCAL-AUTO | AUTO ' | PV | Local SP | Local SP/ REMOTE SP |
| MAN | MANUAL | PV | Output | Output |
| DDC | COMPUTER OUTPUT | PV | Computer Output | None |
| SP | - | PV | Local SP | Local SP/REMOTE SP |
| OUT | - | PV | Output | Output (only if in MANUAL midde) |
| DDC-OUT | - | PV | Computer Outer | None |
| **Local/Manual/Ratio Controller** | | | | |
| LOCAL-AUTO | LOCAL | PV | Local SP | Local SP |
| MAN | MANUAL | PV | Output | Output |
| RATIO-AUTO | AUTO (using Ratioed SP) | | Ratioed SP | None |
| SP | - | PV | Local SP | Local SP |
| OUT | - | PV | Output | Output (only if in MANUAL mode) |
| RATIO-SP | - | PV | Ratioed SP | None |

TABLE 2 (Cont'd)

| Switch Activated | Resultant Mode | Left Bar Display | Right Bar Diaplay | Variable Subject to slew |
|---|---|---|---|---|
| | | Cascade Controller | | |
| CAS-AUTO | CASCADE | PV1 | SP1 | SP1 |
| MAN | MANUAL | PV1 | Output | Output |
| PRI-AUTO | PRIMARY ONLY | PV1 | SP1 | SP1 |
| SEC-AUTO | SECONDARY ONLY | PV2 | SP2 | SP2 |
| SP | - | PV1 | SP1 | SP1 |
| OUT | - | PV1 | Output | Output (only if in MANUAL mode) |
| PRI | - | PV1 | SP1 | SP1 |
| | | Auto Selector Controller | | |
| AUTO | AUTO SELECTOR | Active PV | Active SP | Active SP |
| MAN | MANUAL | Active PV | Output | Output |
| CONTR-1 | CONTROLLER 1 ACTIVE | PV1 | SP1 | SP1 |
| CONTR-2 | CONTROLLER 2 ACTIVE | PV2 | SP2 | SP2 |
| SP | - | Active PV | Active SP | Active SP |
| OUT | - | Active PV | Active Output | Output (only if in MANUAL mode) |
| CONTR-1 | - | PV1 | SP1 | SP1 |
| CONTR-2 | - | PV2 | SP2 | SP2 |

TABLE 3

```
**********************************************************

IN OP     LIN OP      FLTR        DI          AI
SP        L/R SP      LSP         RSP         TRK OP
**********************************************************

RAT MAX   L/R RAT     L RAT       R RAT       IN SP
SRC OP    FAIL OP     SAFE SP     RSP HL      RSP LL
**********************************************************

PV1 OP    PID OP      PV ALM      DEV         DEV1 ALM
PV        K_P         K_I         K_D         TV
**********************************************************

TV OP     P OP        I OP        D OP        TV BKPT
FF OP     FF IN       FF k        FF OUT      AO 3
**********************************************************

DB        INHB OP     OUT OP      AO3 OP      OUT3 OP
DO3 OP    VPFB        OUT         DO          DDC OUT
**********************************************************

H OVR OP  L OVR OP    OUT HL      OUT LL      H/L SEL
H OVR     L OVR       7           8           9
**********************************************************

ID        ↑ ↑         COMM        ALM ACK     MODE
NEXT      ↑           4           5           6
**********************************************************

ENTER     ↓ ↓         EU 0%       EU 100%     EU ID
READ      ↓           1           2           3
**********************************************************

                      AUTH        UNITS       DIAG
CLR       SHIFT       Ø           .           +/-
**********************************************************
```

- 54 -

TABLE 4

| KEYBOARD SEQUENCE | DISPLAY SEQUENCE | COMMENTS |
|---|---|---|
| | AI | |
| | | Read the 6 analog input values (in volts) |
| AI k | AI k | k = 1-6 |
| READ | =nnnnnn V | |
| | IN OP | |
| | | Read/enter the input range option (0-5 or 1-5V) for each of the 6 analog inputs |
| IN OP k | IN OP k | k = 1-6 |
| READ | = 0-5V | two options |
| | = 1-5V | |
| ↑...↓ | = one of above ? | New option being selected by Raise annd Lower keys ? appended to non-active option |
| ENTER | = one of above | New Option selected (? disappears) |
| | LIN OP | |
| | | Read/enter the lineariza- tion option for each of the 6 analog inputs (5 choices) |
| LIN OP k | LIN OP k | k = 1-6 |
| READ | | The 5 choices are: |
| | = OFF | Not used |
| | = V | Direct |
| | = V**1/2 | Square-root |
| | = V**3/2 | "Three halves" |
| | = V**5/2 | "Five halves" |

TABLE 4 (Cont'd)

| KEYBOARD SEQUENCE | DISPLAY SEQUENCE | COMMENTS |
|---|---|---|
| | | LIN OP (continued) |
| ↑...↓ | = one of above ? | Question mark appended to all but the currently active option. |
| ENTER | = one of above | New option selected (? disappears) |
| | FLTR | |
| | | Read/Enter the software filter (0.15 HZ) option for each analog input |
| FLTR k | FLTR k | k = 1-6 |
| READ | = OFF | One of 2 options, OFF=1.5HZ |
| | = ON | ON=0.15HZ |
| ↑...↓ | = one of above ? | ? appended to non-active option |
| ENTER | = one of above | other option selected; (? disappears) |
| | DI | |
| | | Read the current state of the 6 digital inputs |
| DI k | DI k | k = 1-6 |
| READ | = ON | ON = HI |
| | = OFF | OFF = LO |
| | SP | |
| | | Read the current setpoint value (subscripted for Cascade and Selector only) |
| SP k | SP k | k = 1,2 (=2 for selector and cascade models) |
| READ | =nnnnnn* | Value in engineering units |

TABLE 4 (Cont'd)

| KEYBOARD SEQUENCE | DISPLAY SEQUENCE | COMMENTS |
|---|---|---|
| | LSP | |
| | | Read/enter the value of the local setpoint (subscripted for Cascade and Selector only) |
| LSP k | LSP k | K = 1,2 (=2 for selector and cascade models) |
| READ | =nnnnnn* | Value in engineering units |
| m m ... m | mmmmmm* | New value being entered in engineering units |
| ENTER | =mmmmmm* | Value entered (note equal sign) |
| | RSP | |
| | | Read the value of the remote setpoint (subscripted for Cascade and Selector only) |
| RSP k | RSP k | k = 1,2 (=2 for selector and cascade models) |
| READ | =nnnnnn* | Value in engineering units |
| | L/R SP | |
| | | Read/enter the local/remote option for the current setpoint (for the DDC, and SELECTOR models only) |
| L/R SP k | L/R SP k | K = 1,2 (=2 for selector only) |
| READ | = L | One of 2 options |
| | = R | (local SP, remote SP) |
| ↑...↓ | = one of above ? | ? appended to non-active option |

## TABLE 4 (Cont'd)

| KEYBOARD SEQUENCE | DISPLAY SEQUENCE | COMMENTS |
|---|---|---|
| | L/R SP (Continued) | |
| ENTER | = one of above | New option selected by users; (? disappears) |
| | TRK OP | |
| | | Read/enter the setpoint track option |
| TRK OP | TRK OP | |
| READ | = ON | One of two options |
| | = OFF | (OFF = no tracking) |
| ↑...↓ | = one of above ? | ? appended to non-active option |
| ENTER | = one of above | New option selected (? disappears) |
| | L/R RAT | |
| | | Read/enter the ratio-value source being applied to the SP (RATIO model only) |
| L/R RAT | L/R RAT | |
| READ | = L | One of two options |
| | = R | (Local ratio, remote radio) |
| ↑...↓ | = one of above ? | ? appended to non-active option |
| ENTER | = one of above | New option selected (? disappears) |
| | RAT MAX | |
| RAT MAX | RAT MAX | Read/enter the 100% value ot the Ratio setting |
| READ | =nnnnn | Current value |
| m.m.m | mmmmmm | New value being entered |
| ENTER | =mmmmmm | New value entered (note |

TABLE 4 (Contd'd)

| KEYBOARD SEQUENCE | DISPLAY SEQUENCE | | COMMENTS |
|---|---|---|---|
| | | L RAT | Read/enter the local ratio value applied to SP1 (Ratio model only) |
| L RAT | L RAT | | |
| READ | =nnnnnn% | | value (Read out in percent) |
| m m...m | mmmmmm% | | new value being entered by user |
| ENTER | =mmmmmm% | | Value entered (note = sign) |
| | | R RAT | Read the remote ratio value being applied to SP1 (Ratio model only) |
| R RAT | R RAT | | |
| READ | =nnnnnn% | | value (Read out in percent) |
| | | IN SP | Read the value of the input SP (raw, unratioed) (Ratio model only) |
| IN SP | IN SP | | |
| READ | =nnnnnn* | | Value in engineering units |
| | | SRC OP | Read the computer SP or DDC output option (Computer and DDC models only) |
| SRC OP | SRC OP | | |
| READ | =AI | | AI = Positional algorithm |
| | =PULSE | | DI = Velocity algorithm |
| | =COMM | | COMM = Serial Communication |

TABLE 4 (Cont'd)

| KEYBOARD SEQUENCE | DISPLAY SEQUENCE | COMMENTS |
|---|---|---|
| | FAIL OP | |
| | | Read/select the computer's fail option. (Computer and DDC models only) |
| FAIL OP | FAIL OP | One of 4 options: |
| READ | = MAN | - Switch to manual |
| | = LAST | - Switch to local with last SP |
| | = SAFE | - Switch to local with safe SP |
| | = HOLD | - Stay in present mode, ignoring computer |
| ↑...↓ | = one of above ? | ? appended to all non-active options |
| ENTER | = one of above | New option selected (? disappears) |
| | SAFE SP | |
| | | READ/enter the value of the "Safe SP" for the fail option (Computer and DDC model s only) |
| SAFE SP | SAFE SP | |
| READ | =nnnnnn* | SP's current value in engineering units |
| m m...m | mmmmmm* | Value being entered |
| ENTER | =mmmmmm* | Value entered (note equal sign) |
| | RSP HL | |
| | | Read/enter the upper limit on the remote setpoint (subscripted for cascade and selector) |

0057541

- 60 -

TABLE 4 (Cont'd)

| KEYBOARD SEQUENCE | DISPLAY SEQUENCE | COMMENTS |
|---|---|---|
| | | RSP HL (Continued) · |
| RSP HL (k) | RSP HL k | k = 1,2 (=2 selector, cascade models) |
| READ | =nnnnnn* | Value in engineering units |
| m m...m | mmmmmm* | Value being entered |
| ENTER | =mmmmmm* | Value entered (note equal sign) |
| | | RSP LL |
| | | Read/enter the lower limits(s) on the remote setpoint(s) |
| - Identical to RSP HL | | |
| | | PV1 OP |
| | | Read/select the process variable options |
| PV1 OP | PV1 OP | |
| READ | | There are 6 choices: |
| | =AI | AI1 only |
| | =AVG | (AI1+AI3)/2 |
| | =DIF | AI1-AI3 |
| | =PROD | AI1*AI3 |
| | =MAX | the higher of AI1 and AI3 |
| | =MIN | the lower of AI1 and AI3 |
| ... | = one of above ? | Question mark apended to all but the active options |
| ENTER | = one of above | New option selected (? disappears) |

TABLE 4 (Cont'd)

| KEYBOARD SEQUENCE | DISPLAY SEQUENCE | COMMENTS |
|---|---|---|
| | PV | |
| | | Read the current value of the process variable (subscripted for Cascade and Selector only) |
| PV k | PV k | k = 1,2 (=2 for Selector, Cascade Models) |
| READ | =nnnnnn* | Value in engineering units |
| | PV ALM | |
| | | Read/enter the upper and lower alarms on PV1 |
| PV ALM k | PV ALM k | k = 1 for low alarm |
| | | k = 2 for high alarm |
| READ | =nnnnnn* | Alarm value in engineering units |
| m m...m | mmmmmm* | New value being entered |
| ENTER | =mmmmmm* | Value entered (note equal sign) |
| | DEV | |
| | | Read the current value of deviation (SP-PV) (subscripted for Cascade and Selector) |
| DEV k | DEV k | k = 1,2 (=2 for Selector, Cascade Models) |
| READ | =nnnnnn* | Value in engineering units |

TABLE 4 (Cont'd)

| KEYBOARD SEQUENCE | DISPLAY SEQUENCE | | COMMENTS |
|---|---|---|---|
| | | DEV1 ALM | |
| | | | Read/enter the alarm limits on deviation (PID 1 only) |
| DEV1 ALM READ | DEV1 ALM =nnnnnn* | | Current value in engineering units |
| m m...m | mmmmmmm* | | New value being entered |
| ENTER | =mmmmmmm* | | Value entered (note equal sign) |
| | | ALM ACK | |
| ALM ACK | ALM ACK | | Read and acknowledge the current state of the alarms. Display remains the same. Flashing of bar graph or leds is stopped; ie. alarm acknowledged. |
| READ | CPREDLH | | H = PV high alarm |
| | | | L = PV low alarm |
| | | | D = deviation alarm |
| | | | E = DAC zero reference calibration |
| | | | R = RAM re-initialized |
| | | | C = computer fail DI for DDC or CMPTR |
| | | | P = Long power down |
| | | | NOTE:  Only the active alarms will be indicated. If there are no alarms, only blanks are displayed. |

## TABLE 4 (Cont'd)

| KEYBOARD SEQUENCE | DISPLAY SEQUENCE | | COMMENTS |
|---|---|---|---|
| | | PID OP | |
| | | | Read the PID algorithm type |
| PID OP | PID OP | | |
| READ | = I/A | | "Interacting" |
| | | KP | |
| | | | Read/enter the PID proportional tuning constants Kp(1), Kp(2), Kp(3) |
| KP k | KP k | | The subscript is only used in the following cases: |
| | | | (a)  If the advanced tuning option is installed, k = 1, 2, 3 |
| | | | (b)  If selector or Cascade models, then Kp3 will be used for the second PID controller |
| READ | =nnnnnnP | | Value |
| mm...m | mmmmmmP | | New value being entered |
| ENTER | =mmmmmmP | | Value entered (note equal sign) |
| | | KI | |
| | | | Read/enter the integral constant KI |
| KI k | KI k | | See notes for KP on subscripts |

- 64 -

0057541

TABLE 4 (Cont'd)

| KEYBOARD SEQUENCE | DISPLAY SEQUENCE | COMMENTS |
|---|---|---|
| | | $\underline{KI}$ (Continued) |
| READ | =nnnnnnI | Value either in repeats per minute, repeats per second, minutes or seconds. (Press SHIFT UNITS to read current units) |
| m m...m | nnnnnnI | New value being entered |
| ENTER | =nnnnnnI | Value entered (note equal sign) |
| | | $\underline{KD}$ |
| | | Read/enter the derivative constant KD |
| KD k | KD k | See notes for KP |
| READ | =nnnnnnD | Value in minutes or seconds. (Press SHIFT UNITS to read current units) |
| m m...m | nnnnnnD | New value being entered |
| ENTER | =nnnnnnD | Value entered (note equal sign) |

0057541

TABLE 4 (Cont'd)

| KEYBOARD SEQUENCE | DISPLAY SEQUENCE | COMMENTS |
|---|---|---|
| | TV OP | |
| | | Read enter the tuning variable option (only if advanced tuning enabled) |
| TV OP | TV OP | |
| READ | = OFF | = off |
| | = PV1 | = primary PV |
| | = DEV | = Deviation |
| | = [DEV] | = "magnitude" of deviation (for error squared) |
| | = VPFB | = Valve position feedback |
| | = AI5 | = Linearized AI5 |
| | = DI's | = TV determined by digital inputs |
| ↑...↓ | = one of above ? | New option being selected |
| ENTER | = one of above | New option selected (? disappears) |
| | P OP, I OP, D OP | |
| | | Read/enter the breakpoint option for Kp, KI, KD (only if advanced tuning enabled) |
| P OP | P Op | Each of these keys is similar |
| I OP | I OP | in function |
| D OP | D OP | |
| READ | = STEP | 2 options |
| | = SLOPE | |
| ... | = one of above ? | New option being selected |
| ENTER | = one of above | New option selected; (? disappears) |

- 66 -

0057541

TABLE 4 (Cont'd)

| KEYBOARD SEQUENCE | DISPLAY SEQUENCE | COMMENTS |
|---|---|---|
| | | FF OP |
| | | Read/enter the feedforward enable (subscripted for Cascade and Selector only |
| FF OP k | FF OP k | k = 1,2 (for PID1, PID2 respectively) |
| READ | = OFF | = No feedforward to PID k |
| | = ON | = Feedforward enabled to PID K |
| ↑...↓ | = one of above ? | New option being selected |
| ENTER | = one of above | New option selected (note equal sign) |
| | | FF IN |
| | | Read the input value to the FF Block |
| FF IN | FF IN | |
| READ | =nnnnnn% | Value in % |
| | | FF k |
| FF k | FF k | k = 1 for FF gain |
| | | k = 2 for FF lead |
| | | K = 3 for FF lag |
| READ | =nnnnnn | The value in units; the units are: |
| | | FF LEAD=Minutes or seconds |
| | | FF LAG=Minutes or seconds |
| | | FF GAIN=No units |
| | | NOTE: Press SHIFT UNITS to read lead and lag units. |
| n n...n | nnnnnn | New value being entered |
| ENTER | =nnnnnn | Value entered |

TABLE 4 (Cont'd)

| KEYBOARD SEQUENCE | DISPLAY SEQUENCE | COMMENTS |
|---|---|---|
| | | **FF OUT** |
| | | Read the output value of FF block |
| FF OUT READ | FF OUT =nnnnnn% | Value in % |
| | | **AO 3** |
| AO 3 | AO 3 | Read the current value of the auxiliary analog output #3. |
| READ | =nnnnnn% | Value in percent |
| | | **OUT3 OP** |
| OUT3 OP | OUT3 OP | Read/enter the output range of AO3 |
| READ | = 0-5V | 0-5 volt range |
| | = 1-5V | 1-5 volt range |
| ↑...↓ | = one of above? | New value being selected |
| ENTER | = one of above | New value selected (? disappears) |
| | | **AO3 OP** |
| | | Read/enter the AO3 (auxillary output) option |
| AO3 OP | AO3 OP | |
| READ | = OUT | = CONTROLLER Output |
| | = SP | = SETPOINT |
| | = PV | = PROCESS VARIABLE (calculated) |

TABLE 4 (Cont'd)


| KEYBOARD SEQUENCE | DISPLAY SEQUENCE | COMMENTS |
|---|---|---|
| | | |
| | D03 OP | |
| | | Read the D03 option |
| D03 OP | D03 OP | |
| READ | = PV ALM | = "PV Alarm" indication |
| | = MODE 4 | = "Mode 4" indication |
| ↑...↓ | = one of above ? | New option being selected |
| ENTER | = one of above | Selected |
| | | |
| | OUT OP | |
| | | Read the output option |
| OUT OP | OUT OP | |
| READ | = 0-5V | = 0-5V analog output |
| | = 1-5V | = 1-5V analog output |
| | = STEP | = stepper |
| | = PULSE | = pulse |
| | | |
| | INHB OP | |
| | | Read/select the "inhibit raise" and "inhibit lower" options for the controller output |
| INHB OP | INHB OP | |
| READ | = OFF | = not used |
| | = DI | = determined by appropriate DI |
| ↑...↓ | = one of above ? | |
| ENTER | = one of above | New option selected |

TABLE 4 (Cont'd)

| KEYBOARD SEQUENCE | DISPLAY SEQUENCE | COMMENTS |
|---|---|---|
| | H/L SEL | |
| | | Read the high/low selector option (selector model only) |
| H/L SEL READ | H/L SEL = HI | Controller's output = MAX (PID1, PID2) |
| | = LO | Controller's output = MIN (PID1, PID2) |
| ↑...↓ | = one of above ? | New option being selected |
| ENTER | = one of above | Selected |
| | DB | |
| | | Read/enter the deadband value to be applied to the output. |
| DB k READ | DB k =nnnnnn% | Value in % |
| mmmmmm | =mmmmmm% | New value being entered |
| ENTER | =mmmmmm% | New value entered (? disappears) |
| | VPFB | |
| | | Read the controllers latest output value position (AI6) |
| VPFB READ | VPFB =nnnnnn% | Value in % |
| | OUT | |
| | | Read/Slew the value of the controller output |
| OUT READ | OUT =nnnnnn% | Value in % |

0057541

TABLE 4 (Cont'd)

| KEYBOARD SEQUENCE | DISPLAY SEQUENCE | COMMENTS |
|---|---|---|
| | **DO** | |
| | | Read the value of the 6 digital outputs |
| DO k | DO k | k = 1-6 |
| READ | = ON | = HI = 24V |
| | = OFF | = LO = OV |
| | **DDC OUT** | |
| | | Read the current DDC computer's output (DDC model only) |
| DDC OUT | DDC OUT | |
| READ | =nnnnnn% | Value in % |
| | **H OVR OP** | |
| | | Read/select the high-override option for the output |
| H OVR OP | H OVR OP | |
| READ | = ON | = Linear input AI5 |
| | = OFF | = Disabled |
| ↑...↓ | = one of above ? | New option being selected |
| ENTER | = one of above | New option selected (? disappears) |
| | **L OVR OP** | |
| | | Read/select the low-override option |
| L OVR OP | L OVR OP | |
| READ | = ON | = Linear input AI4 |
| | = OFF | = Disabled |
| ↓...↑ | = one of above ? | New option being selected |
| ENTER | = one of above | New option selected (? disappears) |

# 0057541

TABLE 4(Cont'd)

| KEYBOARD SEQUENCE | DISPLAY SEQUENCE | COMMENTS |
|---|---|---|
| | H OVR | |
| | | Read the current value of the analog high-override (AI5.LIN) |
| H OVR READ | H OVR =nnnnnn% | Value in % |
| | L OVR | |
| | | Ride in the current value of the analog low-override (AI4.LIN) |
| L OVR READ | L OVR =nnnnnn% | Value in % |
| | OUT HL | |
| | | Read/enter the value of the output high limit |
| OUT HL READ | OUT HL =nnnnnn% | Value in % |
| m m...m | mmmmmm% | New value being entered |
| ENTER | =mmmmmm% | New value entered (note equal sign) |
| | OUT LL | |
| | | Read/enter the value of the output low limit |
| OUT LL READ | OUT LL -nnnnnn% | Value in % |
| m m...m | mmmmmm% | New value being entered |
| ENTER | =mmmmmm% | New value entered (note equal sign) |

TABLE 4 (Cont'd)

| KEYBOARD SEQUENCE | DISPLAY SEQUENCE | COMMENTS |
|---|---|---|
|  |  | MODE |
|  |  | Read/select the controller mode. The modes are model dependent; see table below |
| READ | = LOC etc. |  |
| ↑...↓ | = XXX ? | New mode being selected |
| ENTER | = XXX | Mode selected |

The following table lists the modes displayed for each model.

MODEL

| MODE | I-M | L-M-R | L-M-CMPTR | A-M-DDC | RATIO | CASCADE | TO R SELECT |
|---|---|---|---|---|---|---|---|
| 1 | LOC | LOC | LOC | LOC | LOC | LOC | LOC |
| 2 | MAN | MAN | MAN | MAN | MAN | MAN | MAN |
| 3 | – | RMT/1 | RMT/1 | RMT/1 | RMT/1 | RMT/1 | RMT/1 |
| 4 | – | – | – | – | – | SEC/2 | SEC/2 |

TABLE 4 (Cont'd)

| KEYBOARD SEQUENCE | DISPLAY SEQUENCE | COMMENTS |
|---|---|---|
| | | EU 0% |
| | | EU 100% |
| | | Read/enter the engineering unit "scaling" values, to enable conversion from the controller's internal 0-100% range, to any desired range of engineering units (linear conversion) Subscripted for Cascade and Selector |
| EU 0% k | EU 0% k | k = 1 for SP1/PV1 |
| | | k = 2 for SP2/PV2 |
| EU 100% k | EU 100% k | |
| READ | =nnnnnn | Value (no units) |
| m m...m | mmmmmm | New value being selected |
| ENTER | =mmmmmm | Value entered (note equal sign) |
| | | EU ID |
| EU ID | ALPHA | Depressing CLR key causes Switch to the alphanumeric overlay. |
| | | AUTH |
| | No change in display | Enable (authorize the ability to enter protected configuration data). |

0057541

TABLE 4 (Cont'd)

| KEYBOARD SEQUENCE | DISPLAY SEQUENCE | | COMMENTS |
|---|---|---|---|
| | | NEXT | Go to the next operation/function/subscript |
| NEXT | Next item displayed | | The next function will automatically be fetched as if that key(s) had been pressed. Normal key sequences may then be keyed in. The next key is the complete sequentially ordered list of functions accessible by the NEXT key. |
| | | ↑  ↓ | Raise or lower (slew) the numerical value being currently displayed. (If changeable) Select options. |
| | | DIAG | Switch to the diagnostics overlay. |
| DIAG | DIAG | | |
| | | CLR | Clear operation |
| CLR | | | |
| | | COMM | Function not finalized (configures the communication interface). |

TABLE 4 (Cont'd)

| KEYBOARD SEQUENCE | DISPLAY SEQUENCE | COMMENTS |
|---|---|---|
| ENTER | = Display | ENTER<br>Enters a new value or option. |
| ID | current ID | ID<br>Display the identifier of the current selected variable. |
| READ | = XXXXX | READ<br>Read the currently selected variable. |
| UNITS | units | UNITS<br>Display the Engineering units ID for this variable |
| SHIFT | No Change | SHIFT<br>Enable the upper case keys. |

TABLE 5

| keystroke Sequence | Display Sequence | Comments |
|---|---|---|
| SHIFT | - - - | |
| A03 OP | A03 OP | keystroke is displayed |
| READ | = OUT | Currently active variable is displayed |
| ( ↓ ) | = OFF? | another choice (note the ?) is displayed |
| ( ↓ ) | = OFF? | since the OFF option is at the end of the stored table of options, the display remains the same |
| ( ↑ ) | = OUT | current setting (note absence of the ?) is displayed as display moves in the other direction in the stored table of options |
| ( ↑ ) | = SP? | another choice is displayed |
| ( ↑ ) | = PV? | another choice is displayed |
| SHIFT | | |
| ENTER | = PV | PV is selected for display and the question mark disappears indicating the change has been made. |

0057541

TABLE 6

| ITEMS ID | SUBSCRIPT | COMMENTS |
|----------|-----------|----------|
| MODEL | | Displayed on power up. |
| IN OP | 6 | |
| LIN OP | 6 | |
| FLTR | 6 | |
| L/R SP | (2) | Only on for DDC and two for SELECTOR models |
| TRK OP | | |
| RAT MAX | | Only for RATIO model |
| L/R RAT | | Only for RATIO model |
| SRC OP | | Only for CMPTR and DDC models |
| FAIL OP | | Only for CMPTR and DDC models |
| SAFE SP | | Only for CMPTR and DDC models |
| RSP HL | (2) | Not used for LM model  Two for SELECTOR. |
| RSP LL | (2) | Not used for LM.  Two for SELECTOR. |
| PV1 OP | | |
| PV ALM | 2 | |
| DEV ALM | | |
| PID OP | | |
| KP | (3) | No subscript except with CASCADE |
| KI | (3) | and SELECTOR models, or with |
| KD | (3) | ADVANCED TUNING option enabled. |
| T UNITS | | |
| TV OP | | Only when Advanced Tuning enabled |
| P Op | | Only when Advanced Tuning enabled |
| I Op | | Only when Advanced Tuning enabled |
| D OP | | Only when Advanced Tuning enabled |
| TV BKPT | | Only when Advanced Tuning enabled |
| FF OP | (2) | Subscript only CASCADE and SELECTOR |
| FF k | 3 | |

0057541

TABLE 6 (Cont'd)

| ITEMS ID | SUBSCRIPT | COMMENTS |
|---|---|---|
| INHB OP | | |
| OUT OP | | |
| A03 OP | | |
| OUT3 OP | | |
| DO3 OP | | |
| HOVR OP | | |
| OUT HL | | |
| OUT LL | | |
| H/L SEL | | Only for SELECTOR model |
| EU 0% | (2) | Subscripted for CASCADE and SELECTOR |
| EU 100% | (2) | Subscripted for CASCADE and SELECTOR |
| EU ID | (2) | Subscripted for CASCADE and SELECTOR |

TABLE 7

| LEADS | INPUT & OUTPUT SIGNALS |
|---|---|
| | LOCAL/MANUAL CONTROLLER |
| AI 1 | Main Process Variable (PV1) |
| AI 2 | not used |
| AI 3 | Feed Forward (FF) or Second Process Variable (PV1 A) |
| AI 4 | Override Low (OVL) |
| AI 5 | Override High (OVH) or Tuning Variable (TV) |
| AI 6 | Valve Position Feedback (VPFB) |
| DI 1 | not used |
| DI 2 | Manual Mode Select (MAN) |
| DI 3 | Local Mode Select (LOC) |
| DI 4 | not used |
| DI 5 | Tuning Breakpoint 1 (TB1) or Inhibit Raise (INH R) |
| DI 6 | Tuning Breakpoint 2 (TB2) or Inhibit Lower (INH L) |
| OUT 1 | Voltage Output (AO1) or Stepper Phase A or Raise (DO1) |
| OUT 2 | Current Output (AO2) or Stepper Phase B or Lower (DO2) |
| AO 3 | Setpoint Feedback (SPFB) or Process Variable (PV1) or Controller Output (CO) |
| DO 3 | Process Variable Alarm (ALM) |
| DO 4 | Local Mode Indication (LOC) |
| DO 5 | Manual Mode Indication (MAN) |
| DO 6 | not used |
| DO 7 | Auxiliary Mode Indication |
| DO 8 | Failure Alarm |

0057541

TABLE 7 (Cont'd)

| LEADS | INPUT & OUTPUT SIGNALS |
|-------|------------------------|

### LOCAL/MANUAL/REMOTE CONTROLLER

| | |
|-------|------------------------|
| AI 1 | Main Process Variable (PV1) |
| AI 2 | Remote Setpoint (RSP) |
| AI 3 | Feed Forward (FF) or Second Process Variable (PV1A) |
| AI 4 | Override Low (OVL) |
| AI 5 | Override High (OVH) or Tuning Variable (TV) |
| AI 6 | Valve Position Feedback (VPFB) |
| DI 1 | not used |
| DI 2 | Manual Mode Select (MAN) |
| DI 3 | Local Mode Select (LOC) |
| DI 4 | Remote Mode Select (RMT) |
| DI 5 | Tuning Breakpoint 1 (TB1) or Inhibit Raise (INH.R) |
| DI 6 | Tuning Breakpoint 2 (TB2) or Inhibit Lower (INH.L) |
| OUT 1 | Voltage Output (AO1) or Stepper Phase A or Raise (DO1) |
| OUT 2 | Current Output (AO2) or Stepper Phase B or Lower (DO2) |
| AO 3 | Setpoint Feedback (SPFB) or Process Variable (PV1) or Controller Output (CO) |
| DO 3 | Process Variable Alarm (ALM) |
| DO 4 | Local Mode Indication (LOC) |
| DO 5 | Manual Mode Indication (MAN) |
| DO 6 | Remote Mode Indication (RMT) |
| DO 7 | Auxiliary Mode Indication |
| DO 8 | Failure Alarm (F. ALM) |

TABLE 7 (Cont'd)

| LEADS | INPUT & OUTPUT SIGNALS |
|---|---|
| | LOCAL/MANUAL/COMPUTER CONTROLLER |
| AI 1 | Main Process Variable (PV1) |
| AI 2 | Computer Setpoint (CSP) |
| AI 3 | Feed Forward (FF) or Second Process Variable (PV1A) |
| AI 4 | Override Low (OVL) |
| AI 5 | Override High (OVH) or Tuning Variable (TV) |
| AI 6 | Valve Position Feedback (VPFB) |
| DI 1 | Computer Failure (CF) |
| DI 2 | Manual Mode Select (MAN) |
| DI 3 | Local Mode Select (LOC) or Inhibit Raise (INH R) |
| DI 4 | Computer Mode Select (CMP) or Inhibit Lower (INH L) |
| DI 5 | Raise (R) or Accept (A) or Tuning Breakpoint 1 (TB1) |
| DI 6 | Lower (L) or Tuning Breakpoint 2 (TB2 ) |
| OUT 1 | Voltage Output (AO1) or Stepper Phase A or Raise (DO1) |
| OUT 2 | Current Output (AO2) or Stepper Phase B or Lower (DO2) |
| AO 3 | Computer Setpoint Feedback (SPFB) |
| DO 3 | Process Variable Alarm (ALM) |
| DO 4 | Local Mode Indication (LOC) |
| DO 5 | Manual Mode Indication (MAN) |
| DO 6 | Computer Mode Indication (CMP) |
| DO 7 | Auxiliary Mode Indication |
| DO 8 | Failure Alarm (F. ALM) |

## TABLE 7 (Cont'd)

| LEADS | INPUT & OUTPUT SIGNALS |
|---|---|
| | **AUTOMATIC/MANUAL/DDC CONTROLLER** |
| AI 1 | Main Process Variable (PV1) |
| AI 2 | Remote Setpoint (RSP) |
| AI 3 | Feed Forward (FF) or Second Process Variable (PV1A) |
| AI 4 | Computer Output (C.OUT) or Override Low (OVL) |
| AI 5 | Override High (OVH) or Tuning Variable (TV) |
| AI 6 | Valve Position Feedback (VPFB) |
| DI 1 | Computer Failure (CF) |
| DI 2 | Manual Mode Select (MAN) |
| DI 3 | Auto Mode Select (AUTO) or Inhibit Raise (INH R) |
| DI 4 | DDC Mode Select (DDC) or Inhibit Lower (INH L) |
| DI 5 | Raise (R) or Accept (A) or Tuning Breakpoint 1 (TB1) |
| DI 6 | Lower (L) or Tuning Breakpoint 2 (TB2) |
| OUT 1 | Voltage Output (AO1) or Stepper Phase A or Raise (DO1) |
| OUT 2 | Current Output (AO2) or Stepper Phase B or Lower (DO2) |
| AO 3 | Setpoint Feedback (SPFB) or Process Variable (PV1) or Controller Output (CO) |
| DO 3 | Process Variable Alarm (ALM) |
| DO 4 | Auto Mode Indication (AUTO) |
| DO 5 | Manual Mode Indication (MAN) |
| DO 6 | DDC Mode Indication (DDC) |
| DO 7 | Auxiliary Mode Indication |
| DO 8 | Failure Alarm (F. ALM) |

TABLE 7 (Cont'd)

| LEADS | INPUT & OUTPUT SIGNALS |
|---|---|
| | LOCAL/MANUAL/RATIO CONTROLLER |
| AI 1 | Main Process Variable (PV1) |
| AI 2 | Signal to be "Ratioed" (INPUT) |
| AI 3 | Feed Forward (FF) or Second Process Variable (PV1A) or Remote Ratio (RR) |
| AI 4 | Override Low (OVL) |
| AI 5 | Override High (OVH) or Tuning Variable (TV) |
| AI 6 | Valve Position Feedback (VPFB) |
| DI 1 | not used |
| DI 2 | Manual Mode Select (MAN) |
| DI 3 | Local Mode Select (LOC) |
| DI 4 | Ratio Mode Select (RAT) |
| DI 5 | Tuning Breakpoint 1 (TB1) or Inhibit Raise (INH R) |
| DI 6 | Tuning Breakpoint 2 (TB2) or Inhibit Lower (INH L) |
| OUT 1 | Voltage Output (AO1) or Stepper Phase A or Raise (DO1) |
| OUT 2 | Current Output (AO2) or Stepper Phase B or Lower (DO2) |
| AO 3 | Setpoint Feedback (SPFB) or Process Variable (PV1) or Controller Output (CO) |
| DO 3 | Process Variable Alarm (ALM) |
| DO 4 | Local Mode Indication (LOC) |
| DO 5 | Manual Mode Indication (MAN) |
| DO 6 | Ratio Mode Indication (RAT) |
| DO 7 | Auxiliary Mode Indication |
| DO 8 | Failure Alarm (F. ALM) |

TABLE 7 (Cont'd)

| LEADS | INPUT & OUTPUT SIGNALS |
|---|---|
| | CASCADE CONTROLLER |
| AI 1 | Primary Process Variable (PV1) |
| AI 2 | Secondary Process Variable (PV2) |
| AI 3 | Feed Forward (FF) or Second Primary Process Variable (PV1A) |
| AI 4 | Override Low (OVL) |
| AI 5 | Override High (OVH) or Tuning Variable (TV) |
| AI 6 | Valve Position Feedback (VPFB) |
| DI 1 | Secondary Mode Select (SEC) |
| DI 2 | Manual Mode Select (MAN) |
| DI 3 | Cascade Mode Select (CAS) |
| DI 4 | Primary Mode Select (PRI) |
| DI 5 | Tuning Breakpoint 1 (TB1) or Inhibit Raise (INH R) |
| DI 6 | Tuning Breakpoint 2 (TB2) or Inhibit Lower (INH L) |
| OUT 1 | Voltage Output (AO1) or Stepper Phase A or Raise (DO1) |
| OUT 2 | Current Output (AO2) or Stepper Phase B or Lower (DO2) |
| AO 3 | Primary Controller Output (PO) or Setpoint (SPFB) or Primary Process Variable (PV1) |
| DO 3 | Process Variable Alarm (ALM) or Secondary Mode Indication (SEC) |
| DO 4 | Cascade Mode Indication (CAS) |
| DO 5 | Manual Mode Indication (MAN) |
| DO 6 | Primary Mode Indication (PRI) |
| DO 7 | Auxiliary Mode Indication |
| DO 8 | Failure Alarm (F. ALM) |

## TABLE 7 (Cont'd)

| LEADS | INPUT & OUTPUT SIGNALS |
|---|---|
| | **AUTO SELECTOR CONTROLLER** |
| AI 1 | Process Variable #1 (PV1) |
| AI 2 | Remote Setpoint #1 (RSP 1) |
| AI 3 | Feed Forward (FF) or Second Process Variable #1 (PV1A) (for function) |
| AI 4 | Process Variable #2 (PV2) |
| AI 5 | Remote Setpoint #2 (RSP2) or Tuning Variable (TV) |
| AI 6 | Valve Position Feedback (VPFB) |
| DI 1 | Controller 2 Mode Select (CON 2) |
| DI 2 | Manual Mode Select (MAN) |
| DI 3 | Auto Select Mode Select (AUTO) |
| DI 4 | Controller 1 Mode Select (CON 1) |
| DI 5 | Tuning Breakpoint 1 (TB1) or Inhibit Raise (INH R) |
| DI 6 | Tuning Breakpoint 2 (TB2) or Inhibit Lower (INH L) |
| OUT 1 | Voltage Output (AO1) or Stepper Phase A or Raise (DO1) |
| OUT 2 | Current Output (AO2) or Stepper Phase B or Lower (DO2) |
| AO 3 | Active Setpoint Feedback (SPFB) or Non-Selected Controller Outputs (N.CO) |
| DO 3 | Process Variable Alarm (ALM) or Controller 2 Mode (CON 2) |
| DO 4 | Auto Select Mode Indication (AUTO) |
| DO 5 | Manual Mode Indication (MAN) |
| DO 6 | Controller 1 Mode Indication (CON 1) |
| DO 7 | Auxiliary Mode Indication |
| DO 8 | Failure Alarm (F. ALM) |

## TABLE 8

### RECORDER

****************************************************

| INPUT | INPUT | INPUT | INPUT | INPUT |
| --- | --- | --- | --- | --- |
| OPTION | SCALE | BIAS | SOURCE | FILTR |

****************************************************

| INPUT | TRACE | TEMP | LOW | HIGH |
| --- | --- | --- | --- | --- |
| VOLTS | VALUE | SCALE | ALARM | ALARM |

****************************************************

| PRI | SEC | | | PAPER |
| --- | --- | --- | --- | --- |
| DIV | DIV | | | ADV |

****************************************************

| CHART | ACTIVE | CHART | | DMD |
| --- | --- | --- | --- | --- |
| SPEED | SPEED | UNITS | | PRINT |

****************************************************

| DAY | MONTH | YEAR | HOUR | MIN |
| --- | --- | --- | --- | --- |

****************************************************

| STATUS | TRACE | | | |
| --- | --- | --- | --- | --- |
| ALARM | ALARM | | | |
| ACKN | ACKN | 7 | 8 | 9 |

****************************************************

| ID | ↑ ↑ | COMM | | |
| --- | --- | --- | --- | --- |
| NEXT | ↑ | 4 | 5 | 6 |

****************************************************

| ENTER | ↓ ↓ | EU 0% | EU 100% | EU ID |
| --- | --- | --- | --- | --- |
| READ/GO | ↓ | 1 | 2 | 3 |

****************************************************

| | | AUTH | UNITS | DIAG |
| --- | --- | --- | --- | --- |
| CLEAR | SHIFT | 0 | . | +/- |

****************************************************

0057541

TABLE 9

| KEYBOARD SEQUENCE | DISPLAY SEQUENCE | COMMENTS |
|---|---|---|
| | INPUT OPTION | |
| | | Read/Enter the linearization option for each of the 4 analog inputs (13 choices) |
| INPUT OPTION k | LINOP k | k = 1-4 |
| READ | =V**5/2 | Five halves |
| | =V**3/2 | Three halves |
| | =V**1/2 | Square root |
| | =V | Direct |
| | =OFF | Off |
| | =PTNM | Platinum RTD |
| | =NKL | Nickel RTD |
| | =TCT | Type T thermocouple |
| | =TCR | Type R thermocouple |
| | =TCS | Type S thermocouple |
| | =TCK | Type K thermocouple |
| | =TCJ | Type J thermocouple |
| | =TCE | Type E thermocouple |
| ↑...↓ | = One of above? | ? Appended to non-active option |
| ENTER | = One of above | Other option selected - (? Disappears) |
| | INPUT SCALE | |
| | | Scale for DAC analog Input to Pre-conditioned Input conversion |
| INPUT SCALE k | INSCAL k | k = 1-4 |
| READ | =nnnn | Unitless |
| mm...m | mmmmm | New scale factor |
| ENTER | =mmmmm | New scale factor entered (Note equal sign) |

0057541

TABLE 9 (Cont'd)

| KEYBOARD SEQUENCE | DISPLAY SEQUENCE | COMMENTS |
|---|---|---|
| | | INPUT BIAS |
| | | Bias for DAC Analog Input to Pre-conditioned Input Conversion. |
| INPUT BIAS k | INBIAS k | k = 1 to 4 |
| READ | =nnnn | Unit less |
| mm...m | mmmmm | New Bias Factor |
| ENTER | =mmmm | New Bias Factor Entered (Note Equal Sign) |
| | | INPUT SOURCE |
| | | Analog Input from MUX or from Serial Communications Line |
| INPUT SOURCE k | INSRC k | k = 1 to 4 |
| READ | = ANALOG | Analog Input Mux |
| | = COMM | Serial communications |
| ↑...↓ | = one of above ? | ? Appended to now active option |
| ENTER | = one of above | Inactive Option selected (? disappears) |
| | | INPUT FILTER |
| | | READ/ENTER the Software filter (0.15HZ) option for each Analog Input |

TABLE 9 (Cont'd)

| KEYBOARD SEQUENCE | DISPLAY SEQUENCE | COMMENTS |
|---|---|---|
| | INPUT FILTER (Cont'd) | |
| INPUT FILTER k | FLTR k | k = 1 to 4 |
| | | one of 2 options |
| READ | = OFF | 1.5 HZ filter |
| | = ON | .15 HZ filter |
| ↑...↓ | = one of above ? | ? Appended to non-active option |
| ENTER | = one of above | In Active option selected. |
| | | (? disappears) |
| | INPUT VOLTS | |
| | | Read the four analog input values (in volts) |
| INPUT VOLTS k | AI k | k = 1 to 4 |
| READ | = nnnnn V | |
| | TRACE VALUES | |
| | | Read the Trace Value |
| TRACE VALUE k | TRACE k | k = 1 to 4 |
| READ | = nnnnn* | Trace Value in Engineering Units |
| | TEMP SCALE | |
| | | Read/Enter Temperature Scale desired for RTD and Thermocouple Linearitation |
| TEMP SCALE k | Temp k | k = 1 to 4 |
| READ | = DEG C | Celsius |
| | = DEG F | Fahrenheit |
| ↑...↓ | = one of above ? | ? appended to non-active option |
| ENTER | = one of above | Other option selected (? disappears) |

0057541

## TABLE 9 (Cont'd)

| KEYBOARD SEQUENCE | DISPLAY SEQUENCE | COMMENTS |
|---|---|---|
| | | **CHART SPEED** |
| | | READ/ENTER Chart Speed |
| CHART | | |
| SPEED k | CHSPD K | k = 1 or 2 |
| READ | = nnnn | Chart Speed in chart units |
| mm.m | mmmmm | New Speed being entered |
| ENTER | = mmmmm | New value entered (note equal sign) |
| | | **ACTIVE SPEED** |
| | | Read which chart speed is presently selected |
| ACTIVE | | |
| SPEED | SPDACT | |
| READ | = SPD1 | Chart speed 1 selected |
| | = SPD2 | Chart speed 2 selected |
| | | **CHART UNITS** |
| | | READ/ENTER the units for the chart speed and time |
| CHART | | |
| UNITS | UNITS | |
| READ | = CM | |
| | = IN | |
| ↑...↓ | = one of above ? | ? appended to non-active option |
| ENTER | = one of above | new option selected (? disappears) |

## TABLE 9 (Cont'd)

| KEYBOARD SEQUENCE | DISPLAY SEQUENCE | COMMENTS |
|---|---|---|
| | DMD PRINT | |
| | | READ/ENTER Demand print condition |
| DMD PRINT | DMDPRT | |
| READ | = OFF | Demand print inactive |
| | = GO | Demand print active |
| ↑...↓ | = one of above ? | ? appended to non-active condition |
| ENTER | = one of above | new condition selected (? disappears) |
| | DAY, YEAR, HOUR, MIN | |
| ALL SIMILAR DESCRIBED TOGETHER | | READ/ENTER Time of Day and Date |
| DAY | DAY | |
| YEAR | YEAR | |
| HOUR | HOUR | |
| MIN | MIN | |
| READ | = nn | |
| mm | mm | new value |
| ENTER | = mm | new value entered |
| | MONTH | |
| | | READ ENTER Month |
| MONTH | MONTH | |
| READ | | one of 12 choices |
| | = JAN | JANUARY |
| | = FEB | FEBRUARY |
| | = MAR | MARCH |
| | = APR | APRIL |

TABLE 9 (Cont'd)

| KEYBOARD SEQUENCE | DISPLAY SEQUENCE | COMMENTS |
|---|---|---|
| | | MONTH (Continued) |
| | | READ ENTER Month |
| MONTH | MONTH | |
| READ | | one of 12 choices |
| | = MAY | MAY |
| | = JUN | JUNE |
| | = JUL | JULY |
| | = AUG | AUGUST |
| | = SEP | SEPTEMBER |
| | = OCT | OCTOBER |
| | = NOV | NOVEMBER |
| | = DEC | DECEMBER |
| ↑...↓ | = one of above ? | ? appended to non-selected month |
| ENTER | = one of above | new month selected (? disappears) |
| | STATUS ALARM ACKN | |
| | | Read Status of Recorder Hardware Alarms/Acknowledge the alarms |
| STATUS ALARM ACKN | DACALM | |
| READ | = D | DAC out of calibration |
| | C | Computer/Async comm failure |
| | M | Recorder in default config. |
| | P | Paper out or chart off |

TABLE 9 (Cont'd)

| KEYBOARD SEQUENCE | DISPLAY SEQUENCE | COMMENTS |
|---|---|---|
| | **TRACE ALARM ACKN** | Read Trace Alarm Conditions/Acknowledge Led |
| **TRACE ALARM ACKN** | ALMSTS | |
| **READ** | 1x2x3x4x | Trace numbers and alarm conditions shown<br>x=H Trace in High Alarm<br>x=L Trace in Low Alarm<br>x=Blank Trace normal |
| | **EU 0%**<br>**EU 100%** | Read/Enter the engineering unit "scaling" values, to enable conversion from the Recorder's internal 0-100% range, to any desired range of engineering units (linear conversion) |
| **EU 0% k** | EU 0% k | k = 1<br>k = 2 |
| **EU 100% k** | EU 100% k | |
| **READ** | = nnnnnn | value (no unit) |
| **mm...m** | mmmmmm | New value being selected |
| **ENTER** | = mmmmmm | Value entered (note equal sign) |
| | **EU ID** | |
| **EU ID** | ALPHA | Switch to the alphanumeric overlay, selected for engineering unit labels. |

TABLE 9 (Cont'd)

| KEYBOARD SEQUENCE | DISPLAY SEQUENCE | | COMMENTS |
|---|---|---|---|
| | | NEXT | Go to the next operation/function/subscript. |
| NEXT | Next item displayed | | The next function will automatically be fetched as if that key(s) had been pressed in the complete sequentially ordered list of functions accessible by the NEXT key |
| ↑↑ ↓↓ | | | Raise or lower (slew) the numerical value being currently displayed. (If changeable) Select options |
| | | DIAG | Switch to the diagnostics overlay. |
| DIAG | DIAG | | Details not yet finalized. |
| | | CLR | Clear operation |
| CLR | | | |

## TABLE 9 (Cont'd)

| KEYBOARD SEQUENCE | DISPLAY SEQUENCE | COMMENTS |
|---|---|---|
| | COMM | Function not finalized (configures the communication interface) |
| ENTER | ENTER = Display | Enters a new value or option. |
| ID | ID current ID | Display the identifier of the currently selected variable. |
| UNITS | UNITS, SHIFT Units | Display the Engineering units ID for this variable. |
| SHIFT | No Change | Enable the upper case keys. Also performs a fast numeric slew. |

1. A microprocessor based single loop control instrument comprising a first microprocessor, a read only memory in which is stored an operating program for said first microprocessor, said program containing machine instructions sufficient to perform a single loop control algorithm which produces an output signal in response to at least a process variable and a setpoint and sufficient to operate said control instrument as one of at least two different types of controllers each having at least two operating modes, means for causing said control instrument to operate as one of the controller types provided for by the program stored in said read only memory, and means for selecting the mode of operation of the controller selected by said causing means.

2. A microprocessor based single loop control instrument comprising a first microprocessor, a read only memory in which is stored an operating program for said first microprocessor, said program containing machine instructions sufficient to perform a single loop control PID algorithm which produces an output signal in response to at least a process variable and a setpoint and sufficient to operate said control instrument as one of at least two different types of controllers each having at least two operating modes, means for causing said control instrument to operate as one of the controller types provided for by the program stored in said read only memory, a communication bus connected to said first microprocessor, and a control panel that comprises a second microprocessor connected to said communication bus, a bar graph display controlled by said second microprocessor for displaying at least one signal related to the operation of said control instrement, means for selecting the mode of operation of the controller selected by said means, and means for selecting at least one of the signals displayed by said bar graph display.

3. A single loop control instrument as claimed in either of claims 1 and 3 having a microprocessor based front panel that comprises a microprocessor, a bar graph display controlled by said microprocessor, means for selecting at least one variable for display on said bar graph display, means for slewing a cariable display by said bar graph display, and a communication bus linking the microprocessor of said front panel with the first microprocessor of the control instrument.

4. A single loop control instrument as claimed in any of the preceding claims and an additional microprocessor based instrument of which the microprocessor is connected to a communication bus that is connected to the first microprocessor of the control instrument.

5.   A single loop control instrument as claimed
in any of the preceding claims and a microprocessor
based communication module for converting parallel
signals from the first microproces or to serial
signals and for  converting seaial signals to parallel
signals which are supplied to the first microprocessor.

6.   A single loop control instrument as claimed in
any of the preceding claims and a second microprocessor that is connected to said first microprocessor
via a communication bus and comprises means for tracking
said output control signal from said first microprocessor and read only memory,means for signalling
the failure of the first microprocessor, and means for
switching an output of the control instrument from
said output signal generated by said first microprocessor
to an output signal generated by said second microprocessor, whereby a bumpless transfer in the output signal
is achieved since the second microprocessor had been
tracking the output of the first microprocessor.

7.   A single loop control instrument as claimed in
any of the preceding claims wherein said read only
memory contains machine instructions sufficient to operate
said control instrument as at least two of the following
types of controllers:

a local/manual controller,

a local/manual/remote controller,

a local/manual/computer controller,

an auto/manual/direct digital control
controller,

a local/manual/ratio controller,

a cascade controller, and

an auto/select controller.

8. A single loop control instrument as claimed in any of the preceding claims wherein the single loop control algorithm is a PID algorithm that uses the tuning parameters KP, KI and KD, said control instrument further comprising a random access memory, means for entering into said random access memory at least two sets of said tuning parameters and at least one break point, and means for selecting a tuning parameter from one set of tuning parameters or the other in accordance with whether a turning variable is greater or lesser than said breakpoint.

9. A single loop control instrument as claimed in any of the preceding claims and a microprocessor based keyboard instrument connected by a communication bus to the first microprocessor of the control instrument and the control program stored in said read only memory of the control instrument being such that it can be modified by operation of the keys of said keyboard.

0057541

- 100 -

10. A single loop control instrument as claimed in claim 9 in which the keyboard instrument is a keyboard/ display instrument snd means is provided for displaying on said keyboard/display signals from the first microprocessor.

11. A keyboard/display to be used in conjunction with an instrument as claimed in any of the preceding claims comprising a microprocessor, a read only memory in which is stored an operating program for the microprocessor, a keyboard having a plurality of keys, a display, and means for connecting said microprocessor to another instrument, the program stored in said read only memory being responsive to a signal from the instrument to which said keyboard/display is connected whereby upon receipt of a signal from one type of instrument at said keyboard/display at least some of said keys of said keyboard are given first functions and upon receipt of a signal from a second type of instrument said keys are given different functions.

12. A keyboard/display as claimed in 11 further comprising a random access memory in which may be stored data received from one instrument to which said keyboard/ display is connected and from which may be read data from said keyboard/display.

FIG. 1

FIG. 2

2/22

005754I

FIG. 3

# FIG. 4A

LOC-MAN CONTROLLER (331), LOC-MAN-RMT CONTROLLER (332), LOC-MAN-CMPTR CONTROLLER (333), AUTO-MAN-DDC CONTROLLER (334)

# FIG. 4B

| LOC-MAN-RATIO CONTROLLER | CASCADE CONTROLLER | SELECTOR CONTROLLER |

335     336     337

**LOC-MAN-RATIO CONTROLLER**

MODE: LOCAL AUTO, MAN, RATIO AUTO, FAST/ACK, PWR S/M

DISPLAY: SP, OUT, RATIO SP, RATIO SET, ↑, ↓

**CASCADE CONTROLLER**

MODE: CAS AUTO, MAN, PRI AUTO, SEC AUTO, FAST/ACK, PWR S/M

DISPLAY: SP, OUT, PRI, SEC, ↑, ↓

**SELECTOR CONTROLLER**

MODE: AUTO, MAN, CONTR 1, CONTR 2, FAST/ACK, PWR S/M

DISPLAY: SP, OUT, CONTR 1, CONTR 2, ↑, ↓

5/22

0057541

FIG. 5

# FIG. 6

# FIG. 7

# FIG. 8

AI 1 >

∇4
∇5 (AI 1)

∇1

(In OP 1)
= 0 - 5V
= 1 - 5V

Ratio + Bias

Off
V
V½
V3/2
V5/2

∇1 (LIN OP1)

∇1 (FLTR 1)

0.15 HZ
On/Off

AI1 LIN

0057541

# FIG. 9

# FIG. 10

# FIG. 11

Block 4

(L RAT) ②①     ▽① (RAT MAX)

(RSP HL) ▽①    (RSP LL) ▽①

Ratio Local

L Ratio

R Ratio ▽⑤

AI3 LIN

▽① Ratio Source
(L/R RAT)
=Local
=Remote

AI2 LIN

Ratio Input

Multiplier

(Ratioed SP)

(Remote SP)

RSP1 ▽⑤

⬛ (crossover)

▽③ Model
=LM Ratio
=LM RMT
=Selector
=AM DDC
=LM Cmptr.

Cmptr. SP

CSP/C Out

Accept

DI 1

▽④

▽⑤ (DI 1)

Sample/Hold

Cmptr. Fail

0.1% Full Scale Inc./Dec. per Pulse

Raise

Lower

DI 2

▽④

▽⑤ (DI 2)

Comm. Handler

▽① Computer Source
(SRC OP)
=AI
=Pulse
=Comm.

▽③
(DDC Out) ▽⑤

DI 3

▽④ ▽⑤ (DI 3)

LSP 1

LSP 1

LSP 1

Mode
=Local, Man
=RMT, Ratio, Comptr.

▽①
▽②
▽④

LSP 1

(L/P SP1)
=LSP
=RSP

▽①

(SP) ▽⑤
SP 1

Model ▽③
= LM
= Cascade
= LM Ratio
= LM Rmt.
= LM Cmptr.
=AM DDC
=Selector

# FIG. 12

FF Gain

Feed Forward Input
(FF In) ▽5̲

Lead Constant
(FF K2) ▽1̲

—(FF K ) ▽1̲

Multiplier

Lag Constant
(FF K3)

▽1̲

▽5̲ (FF Out)
FF Out

FIG. 13

0057541

14/22

# FIG. 14

0057541

FIG. 15

# FIG. 16

# FIG. 17

0057541

# FIG. 18

0057541

# FIG. 19

# FIG. 20

# FIG. 21

0057541

## DOCUMENTS CONSIDERED TO BE RELEVANT

| Category | Citation of document with indication, where appropriate, of relevant passages | Relevant to claim |
|---|---|---|
| X,Y | CONTROL AND INSTRUMENTATION, volume 7, no.9, October 1975 LONDON (GB) WOOD: "De-centralisation of intelligence - the key to low cost control?" pages 30-33<br><br> * page 30, left-hand column, lines 35-40; page 33, middle column, lines 13-20 and 36-40 and right-hand column, lines 29-60 *<br><br>-- | 1-4 |
| Y | REGELUNGSTECHNISCHE PRAXIS, volume 22, no.3, March 1980 MÜNCHEN (DE) SENDLER:"Ein fehlertolerierende Reglerstation auf der Basis eines busorientierten Multi-Mikrorechner-Systems", pages 73-81<br><br> * page 77, left-hand column, line 28 to right-hand column, line 20; figure 4 * | 2-4 |

**CLASSIFICATION OF THE APPLICATION (Int. Cl. 3)**

G 06 F 15/46

**TECHNICAL FIELDS SEARCHED (Int.Cl. 3)**

G 06 F 15/46

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X | The present search report has been drawn up for all claims

| Place of search | Date of completion of the search | Examiner |
|---|---|---|
| THE HAGUE | 16-04-1982 | BURGAUD |

EPO Form 1503.1 06.78